**Europäisches Patentamt**

(19) **European Patent Office** (11) Veröffentlichungsnummer: **0 150 370**

**Office européen des brevets** **B1**

(12) **EUROPÄISCHE PATENTSCHRIFT**

(45) Veröffentlichungstag der Patentschrift: (51) Int. Cl.⁴: **H 02 M 1/084,** H 02 M 7/162,
22.07.87 H 02 M 7/00

(21) Anmeldenummer: **84115092.3**

(22) Anmeldetag: **10.12.84**

(54) **Verfahren und Vorrichtung zum schnellen Ermitteln einer netzsynchronen Referenzspannung für einen netzgeführten Stromrichter nach einer Netzstörung.**

(30) Priorität: **21.12.83 DE 3346291**

(43) Veröffentlichungstag der Anmeldung:
**07.08.85 Patentblatt 85/32**

(45) Bekanntmachung des Hinweises auf die Patenterteilung:
**22.07.87 Patentblatt 87/30**

(84) Benannte Vertragsstaaten:
**CH DE FR GB LI SE**

(56) Entgegenhaltungen:
**EP-A-0 117 421**
**US-A-3 824 437**
**US-A-3 922 594**

(73) Patentinhaber: **Siemens Aktiengesellschaft Berlin und München, Wittelsbacherplatz 2, D-8000 München 2 (DE)**

(72) Erfinder: **Neupauer, Helmut, Dr., Heiligenlohstrasse 3b, D-8520 Erlangen (DE)**

**Beschreibung**

Die Erfindung betrifft ein Verfahren zum Ermitteln einer netzsynchronen Referenzspannung für einen Steuersatz eines netzgeführten Stromrichters, insbesondere bei einem nach einer Netzstörung mit Oberschwingungen behafteten Wechselspannungsnetz. Die Erfindung betrifft ferner eine Vorrichtung zur Durchführung des Verfahrens entsprechend dem Oberbegriff des Anspruchs 14.

Aus der deutschen Offenlegungsschrift 20 19 263 ist eine Einrichtung zum phasenrichtigen Glätten von Vektorkomponenten-Spannungen bekannt. Dabei werden zwei Spannungen als orthogonale Komponenten eines Vektors in einem raumfesten orthogonalen Bezugsystem aufgefaßt und dem Vektoreingang eines Vektordrehers zugeführt. Dem Winkelsignaleingang des Vektordrehers werden zwei normierte Spannungen eingegeben, die als Sinus und Cosinus eines veränderlichen Winkels den kartesischen raumfesten Koordinaten eines mit einer Transformationsfrequenz rotierenden Einheitvektors entsprechen. Diese normierten Spannungen dienen als Transformationselemente für eine Koordinatentransformation, so daß der Vektordreher am Ausgang die orthogonalen Komponenten des Vektors in einem mit dem Einheitsvektor synchron umlaufenden Bezugsystem liefert. Der Quotient dieser umlaufenden Orthogonalkomponenten entspricht dem Tangens der Winkelkoordinate des transformierten Vektors und ist einem Regler zugeführt, dessen Ausgangssignal als frequenzproportionale Steuerspannung einem Sinus- und Cosinusgenerator zur Bildung der normierten Spannungen für den Winkelsignaleingang des Vektordrehers eingegeben ist. Dadurch wird erreicht, daß der rotierende Einheitsvektor dem vorgegebenen Vektor so nachgeführt wird, daß die Winkelkoordinate im rotierenden Bezugsystem zu Null wird. Die transformierte, zum Einheitsvektor parallele Komponente des Vektors ist einem weiteren Regler zugeführt, dessen Ausgangssignal bei Abgleich der Winkelkoordinate den Betrag des Vektors darstellt. Durch Multiplikation dieses Betrags mit den Ausgängen des Sinus-Cosinus-Funktionsgebers entstehen dann die gesuchten geglätteten orthogonalen raumfesten Vektorkomponenten.

Durch die EP-A-117 421 gehört es nach Art. 54(3) EPÜ zum Stand der Tehnik, dieses Verfahren zu einer rauscharmen Frequenzmessung an einem mehrphasigen Leitungssystem zur elektrischen Leistungsübertragung zu erweitern. Soll z. B. die Frequenz eines Wechselspannungsnetzes erfaßt werden, so werden aus den Meßwerten zwei Spannungssignale gebildet, die als Orthogonalkomponenten in einem raumfesten Bezugsystem einen das Netzspannungssystem beschreibenden Istvektor festlegen. Diese raumfesten Vektorkomponenten werden durch eine Frequenztransformation, die durch den erwähnten Vektordreher durchgeführt wird, in zwei frequenztransformierte orthogonale Mitsystem-Komponenten überführt. Die Frequenz der Transformationselemente, d.h. die Frequenz des am Winkelsignaleingang des Vektordrehers eingegebenen Einheitsvektors, wird nun dadurch bestimmt, daß für die Winkelkoordinate des transformierten Vektors ein Sollwert vorgegeben und die Regelabweichung der Winkelkoordinate von diesem Sollwert ausgeregelt wird. Dabei ist vorgesehen, die Frequenz der Transformationselemente mit der Nennfrequenz des Wechselspannungsnetzes, die den ungefähren Mittelwert der Netzfrequenz darstellt, vorzusteuern. Solange das Wechselspannungsnetz vorhanden ist, entspricht im abgeglichenen Zustand die Frequenz der frequenzveränderlichen Transformationselemente der gesuchten Netzfrequenz, so daß als der gesuchte Frequenz-Meßwert direkt die Oszillationsfrequenz am Frequenzsteuereingang des Sinus-Cosinus-Gebers abgegriffen wird.

Bei netzgeführten Stromrichteranlagen, z. B. bei Stromrichtern zur Einspeisung in ein vorgegebenes Spannungsnetz und insbesondere zur Einspeisung in eine Hochspannungs-Gleichstrom-Übertragung, wird häufig gefordert, daß der Energietransport, der während einer Störung des Netzes durch eine Stromrichtersperrung unterbunden ist, nach Beendigung der Störung möglichst schnell wieder aufgenommen wird. Voraussetzung für das Wiederanfahren einer derartigen netzgeführten Stromrichteranlage ist, daß eine phasenrichtige Referenzspannung für die Synchronisierung des Steuersatzes dieser Anlage möglichst sofort zur Verfügung steht. Bei diesen Anwendungsfällen ist also nicht nur die Erfassung der Frequenz, sondern auch die rasche und phasenrichtige Erfassung der Phasenlage des Netzes nötig.

Die wiederkehrende Spannung besteht aber nicht lediglich aus einer sprungartig eingeschalteten Grundschwingung, vielmehr treten auch Oberfrequenzen mit unbekannter Frequenz sowie Einschwingvorgänge mit verschiedenen unbekannten Frequenzen und abklingenden Amplituden auf, wobei diese Oberschwingungsanteile ein unsymmetrisch abklingendes System darstellen. Diese Oberfrequenzen sind dabei nicht notwendig ganzzahlige Vielfache der Netzfrequenz, auch wenn sie in der Regel mit der zweiten Oberfrequenz beginnen und häufig ausgeprägte harmonische Schwingungen dritter und höherer Ordnungszahlen enthalten.

Der Erfindung liegt nun die Aufgabe zugrunde, ein Verfahren und eine Vorrichtung anzugeben, die es gestattet, möglichsf schnell nach Beendigung einer Netzstörung eine netzsynchrone Referenzspannung zur Verfügung zu stellen, mit der der Steuersatz eines netzgeführten Stromrichters gesteuert werden kann, ohne daß Kommutierungsfehler zu befürchten wären.

Dies gelingt mit einem Verfahren mit den Merkmalen des Anspruchs 1 und einer Vorrichtung mit den Merkmalen des Anspruchs 14.

Vorteilhafte Weiterbildungen der Erfindung sind in den Unteransprüchen gekennzeichnet. Anhand von 18 Figuren und mehreren Ausführungsbeispielen ist die Erfindung näher erläutert.

Dabei zeigen:

Fig. 1 und Fig. 2 erste Ausführungsbeispiele der Erfindung,

Fig. 3 ein dreiphasiges Netzspannungssystem mit einem Spannungsausfall,

Fig. 4 die Orthogonalkomponente des Netzspannungssystems,

Fig. 5 die Frequenzanteile dieser Orthogonalkomponente,

Fig. 6 die Frequenzanteile der frequenztransformierten Orthogonalkomponente,

Fig. 7 und Fig. 8 Amplitudenfaktor und Schaltung der Glättungsglieder,

Fig. 9 und Fig. 10 Signalverläufe, die mit der Vorrichtung nach Fig. 1 erhalten werden,

Fig. 11 bis Fig. 15 Aufbau und Wirkungsweise einer Zusatzeinrichtung zur Schnellsynchronisierung,

Fig. 16 eine vereinfachte Anordnung mit polarer Arbeitsweise,

Fig. 17 und Fig. 18 Aufbau und Signalverlauf bei einer teilweise digitalisierten Ausführung.

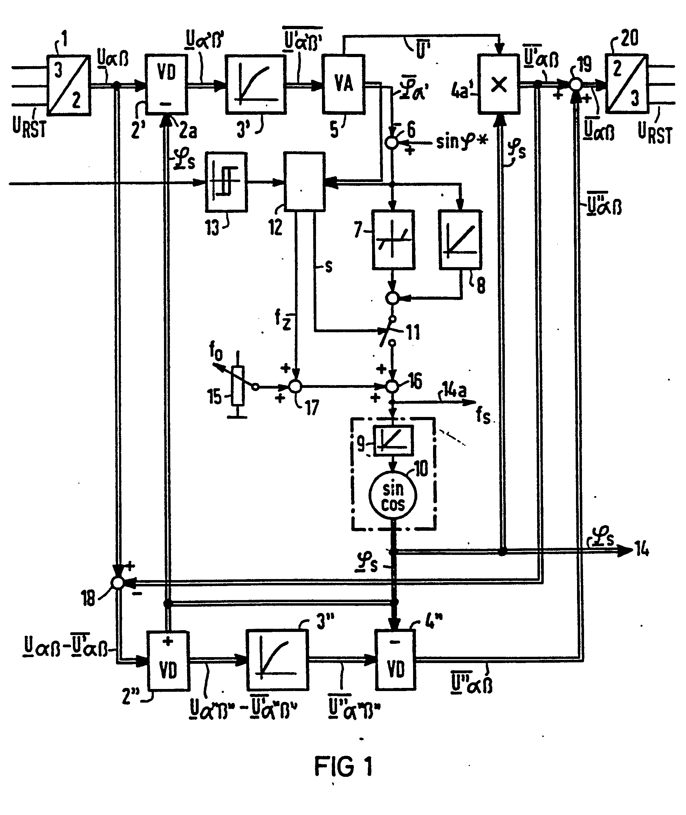

In Figur 1 ist am Beispiel eines dreiphasigen Netzes ein erstes vorteilhaftes Ausführungsbeispiel der Erfindung schematisch dargestellt mit folgenden Bauteilen: Aus den Phasenspannungen $U_R$, $U_S$, $U_T$ des Netzspannungssystems $U_{RST}$ bildet ein 3/2-Wandler 1 als <u>Netzerfassungsglied</u> zwei Wechselspannungskomponenten $U_\alpha$, $U_\beta$. Diese beschreiben zumindest für den häufigsten Fall $U_R + U_S + U_T = 0$ zu jedem Augenblick das Netzspannungssystem vollständig, wobei sie als Komponenten eines Vektors $\underline{U}_{\alpha\beta}$ aufgefaßt werden können, dem ein raumfestes Koordinatensystem aus zwei orthogonalen Achsen $\underline{\alpha}$, $\underline{\beta}$ zugrundegelegt ist. Ist ein Null-System $U_O = U_R + U_S + U_T$ vorhanden, so läßt sich die in Figur 1 dargestellte Vorrichtung ebenfalls anwenden, indem man von dem Netzspannungssystem diese Nullkomponente $U_O$ abspaltet und getrennt auf gleiche Weise weiterverarbeitet.

Ein <u>erster Vektordreher</u> transformiert die raumfesten Komponenten in ein rotierendes Bezugssystem, dem die orthogonalen Achsen $\underline{\alpha}'$, $\beta'$ zugrundegelegt sind. Der Transformationswinkel $\varphi_s$ zwischen den Achsen $\underline{\alpha}$ und $\underline{\alpha}'$ ist dem Vektordreher 2' an seinem Winkeleingang 2a in Form der Transformationselemente $\cos \varphi_s$ und $\sin \varphi_s$ mit der Transformationsfrequenz $f_s = 2\pi \, d \, \varphi_s/dt$ zugeführt. In diesem rotierenden Bezugssystem besitzt der Ist-Vektor die transformierten Komponenten $U_{\alpha'}$, $U_{\beta'}$, die den Istwertvektor in Form des transformierten Vektors $\underline{U}_{\alpha' \beta'}$ festlegen.

Ein <u>erstes Glättungsglied 3'</u> bildet aus den transformierten Komponenten durch Glättung die Komponenten

$$\overline{U'_{\alpha'}}$$

und

$$\overline{U'_{\beta'}},$$

die als "transformierte Mitsystemkomponenten" bezeichnet werden und einen Vektor

$$\underline{\overline{U'}}_{\alpha' \beta'}$$

festlegen. Die polare Winkelkoordinate dieses Vektors

$$\underline{\overline{U'}}_{\alpha' \beta'}$$

ist im folgenden mit

$$\overline{\varphi'_{\alpha'}}$$

bezeichnet.

Ein Vektoranalysator 5 liefert als <u>Phasen-Differenz-Bildner</u> an seinem Winkelsignalausgang ein als Doppelpfeil dargestelltes Winkelsignalpaar cos

$$\overline{\varphi'_{\alpha'}},$$

sin

$$\overline{\varphi'_{\alpha'}}$$

für diese Winkelkoordinate

$$\overline{\varphi'\ \alpha'}\ ,$$

wobei das Einzelsignal sin

$$\cdot\ \overline{\varphi'\ \alpha'}$$

an einer Vergleichsstelle 6 mit einem Sollwert sin $\varphi^*$ verglichen werden kann. Für kleine Winkel

$$\overline{\varphi'\ \alpha'}$$

und $\varphi^*$ entspricht diese Regelabweichung der Sinus-Funktionen der Regelabweichung der entsprechenden Winkel. Der Sollwert $\varphi^*$ legt in dem rotierenden $\underline{\alpha',\beta'}$-System eine Achse fest, die insbesondere für $\varphi^* = 0$ gleich der $\alpha'$-Achse ist, so daß in diesem bevorzugten Fall die Regelvergleichsstelle 6 entfallen kann. Nachgeschaltet ist ein Regelverstärker, durch den die Regelabweichung mit einer für steigende Werte überproportional ansteigenden Regelkreisverstärkung ausregelbar wird. Dadurch kann eine durch Verwendung der Sinus-Funktion entstehende Nichtlinearität kompensiert bzw. überkompensiert werden. Da in diesem Fall für die vorgesehene Phasenregelung ein integrierendes Verhalten angestrebt wird, ist diesem nichtlinearen Regelverstärker 7 ein Integralregler 8 zur Erzeugung eines integrierenden Verstärkungsanteils parallel geschaltet.

Dem Phasendifferenz-Bildner ist ein Stellglied nachgeschaltet, das die raumfesten Komponenten der rotierenden Bezugsachse $\alpha'$ bildet, also die Größen cos $\varphi_s$ und sin $\varphi_s$, die als Transformationselemente auf den Winkelsignal-Eingang 2a des ersten Vektordrehers 2' geführt werden. In Figur 1 besteht dieses Stellglied aus einem von der verstärkten Regelabweichung gespeisten Integrator 9, dem ein Sinus-Cosinus-Geber 10 nachgeschaltet ist. Die Transformationsfrequenz $f_s$, mit der der Transformationswinkel $\varphi_s$ der Transformationselemente veränderlich ist, wird durch diese Anordnung also so geregelt, daß im abgeglichenen Zustand

$$\overline{\varphi'\ \alpha'}$$

$= \varphi_s + \varphi^*$ ist, d.h. für $\varphi^* = 0$ die Richtung des durch die transformierten Mitsystemkomponenten bestimmten Mitsystem-Vektors

$$\overline{\underline{U}\ \alpha'\ \beta'}$$

in die $\alpha'$-Achse fällt.

Zwischen dem Phasendifferenz-Bildner und dem Stellglied ist ein Umschalter 11 vorgesehen, durch den die Frequenzvorgabe der Transformationselemente zwischen einer Steuerung mit einem gespeicherten Frequenzwert $f_0$ bei Netzstörung (geöffneter Schalter 11) und einer Regelung (geschlossener Schalter 11) umschaltbar ist, so daß die Regelung nach Wiederkehr des Wechselspannungsnetzes die vom Phasendifferenz-Bildner gebildete Regelabweichung ausregeln kann. Bei der Schaltung nach Figur 1 ist dabei vorgesehen, den gespeicherten Frequenzwert $f_0$, der insbesondere auf die Nennfrequenz des Netzes eingestellt sein kann, auch im Fall der ungestörten Netzspannung auf den Frequenzsteuereingang 16 des Stellgliedes aufzuschalten, was einer Vorsteuerung der Transformationsfrequenz mit der gespeicherten Frequenz $f_0$, die einem vorgegebenen Mittelwert für die Netzfrequenz entspricht, gleichkommt.

Der Schalter 11 wird von einer Steuereinrichtung 12 in Abhängigkeit von einem von einem Netzwächter 13 gebildeten Störungssignal betätigt, das Beginn und Ende der Netzstörung anzeigt. Zur Verkürzung der Anregelzeit ist dabei vorgesehen, daß die Steuereinrichtung 12 aus der Regelabweichung, also z. B. dem Winkelsignal des Vektoranalysators 5, zusätzlich einen quantisierten Wert der Regelabweichung bildet und mit diesem quantisierten Wert vorübergehend derart in die Steuerung oder Regelung der Transformationsfrequenz eingreift, daß die Phase der Transformationselemente um diesen quantisierten Wert verstellt wird. Dies geschieht dadurch, daß vorübergehend auf den Frequenzsteuereingang des Stellgliedes ein zusätzlicher Frequenzwert $f_z$ aufgeschaltet wird (Additionsglied 17).

Die Phase $\varphi_s$ der Transformationselemente entspricht im abgeglichenen Zustand, wie noch erläutert werden wird, direkt der Phase der Mitsystem-Grundschwingung des Netzes. Genügt es, als netzsynchrones Referenzsignal lediglich die Mitsystem-Grundschwingungsphase zu erfassen, so kann als Referenzsignal z. B. direkt am Ausgang 14 das Signalpaar cos $\varphi_s$, sin $\varphi_s$ abgegriffen werden. Wird dagegen auch die Amplitude der Mitsystem-Grundschwingung für das Referenzsignal benötigt, so können die Transformationselemente mit dieser Amplitude gewichtet werden. Dies geschieht in Figur 1 dadurch, daß der Betragsausgang des Vektoranalysators 5 einem Multiplizierer 4a' für die Transformationselemente zugeführt wird.

Im allgemeinen enthält die Grundschwingung des Spannungssystems auch ein Gegensystem, das bei der Bildung der netzsychronen Referenzspannung berücksichtigt werden soll. Gemäß Figur 1 werden hierbei die Komponenten

$$\overline{U'_\alpha}$$

und

$$\overline{U'_\beta},$$

die vom Multiplizierer 4a' als raumfeste Orthogonalkomponenten des Mitsystem-Vektors

$$\overline{\underline{U}'_{\alpha\beta}}$$

bereitgestellt werden, von den entsprechenden raumfesten Komponenten $U_\alpha$ und $U_\beta$ des Ist-Vektors $\underline{U}_{\alpha\beta}$ subtrahiert. Der von der entsprechenden Subtraktionsstufe 18 gebildete Differenzvektor $\underline{U}_{\alpha\beta}$ -

$$\overline{\underline{U}'_{\alpha\beta}}$$

wird mittels eines zweiten, ebenfalls von den Transformationselementen $\cos\varphi_s$, $\sin\varphi_s$ beaufschlagten Vektordrehers in ein entgegengesetzt rotierendes Bezugssystem transformiert. Diesem zweiten Bezugssystem liegen die kartesischen Achsen $\underline{\alpha}''$ und $\underline{\beta}''$ zugrunde, wobei die $\alpha''$-Achse mit der Frequenz $-f_s$ rotiert, also gegenüber der raumfesten $\alpha$-Achse den Winkel $-\varphi_s$ einschließt. Im $\alpha''$, $\beta''$-System besitzt der Ist-Vektor die Orthogonalkomponenten $U_{\alpha''}$ und $U_\beta''$, die einen Vektor $\underline{U}_{\alpha''\beta''}$ beschreiben, und der Differenzvektor die Orthogonalkomponenten eines Vektors $\underline{U}_{\alpha''\beta''}$

$$- \overline{\underline{U}'_{\alpha''\beta''}} >$$

Diese Vektorkomponenten werden in einem zweiten Glättungsglied 3'' geglättet, dessen Ausgangssignale

$$\overline{U''_{\alpha''}}$$

und

$$\overline{U''_{\beta''}}$$

im $\alpha''$, $\beta''$-System einen als "Gegensystem-Vektor" bezeichneten Vektor

$$\overline{\underline{U}''_{\alpha''\beta''}}$$

festlegen.

Ein weiterer, nachgeschalteter Vektordreher 4'' transformiert nun diese Gegensystemkomponenten

$$\overline{U''_{\alpha''}}$$

und

$$\overline{U''_{\beta''}}$$

in das raumfeste $\alpha,\beta$-System zurück und liefert somit die raumfesten Komponenten $U''\alpha$ und $U''\beta$ des Gegensystem-Vektors

$$\overline{\underline{U}''_{\alpha\beta}}$$

der Grundschwingung.

Eine Additionsstelle 19 dient der Vektoraddition der beiden Vektoren

$$\overline{\underline{U}'_{\alpha\beta}}$$

und

$$\overline{\underline{U}''_{\alpha\beta}} ,$$

so daß nunmehr der Summenvektor

$$\overline{\underline{U}_{\alpha\beta}} = \overline{\underline{U}'_{\alpha\beta}} + \overline{\underline{U}''_{\alpha\beta}}$$

zur Verfügung steht, der die gesamte Grundschwingung beschreibt und dem durch einen 2/3-Wandler 20 die entsprechenden Grundschwingungen $U_R$, $U_S$ und $U_T$ der Phasenspannungen zugeordnet werden können.

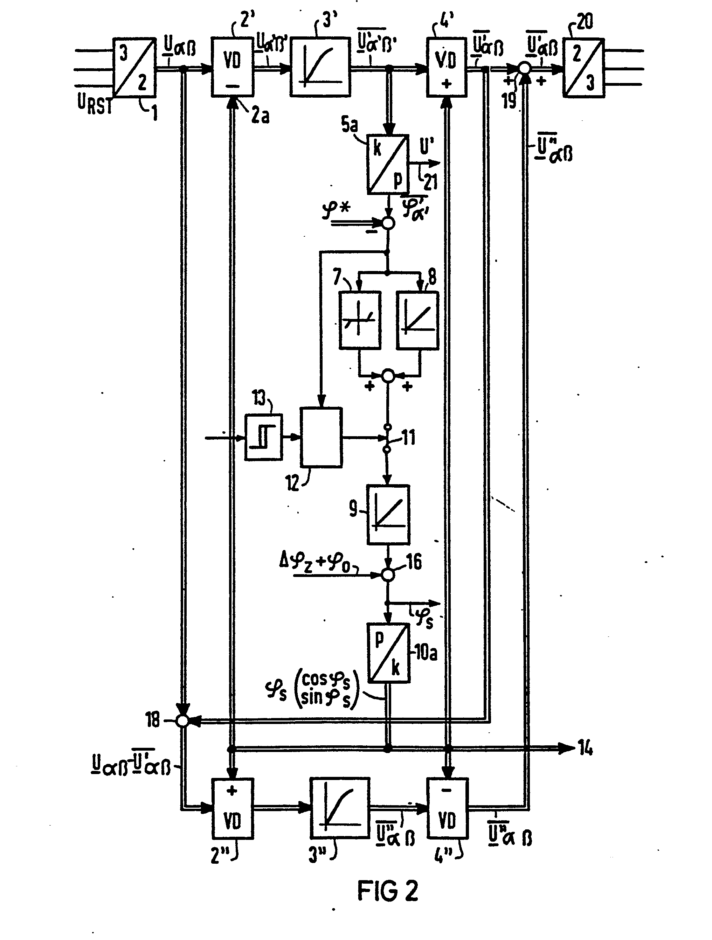

Figur 2 zeigt eine etwas abgewandelte Ausführungsform, bei der die durch die Bezugszeichen der Figur 1 bezeichneten Bauteile unverändert beibehalten sind. Anstelle des von der Betragskoordinate

$$\overline{U'}$$

des transformierten Mitsystem-Vektors

$$\overline{\underline{U}'_{\alpha'\beta'}}$$

beaufschlagten Multiplizierers 4a' für die Transformationselemente ist in Figur 2 ein zum ersten Vektordreher 2' inverser Vektordreher 4' verwendet. Dieser Vektordreher transformiert die Komponenten

$$\overline{U'_{\alpha'}}$$

und

$$\overline{U'_{\beta'}}$$

aus dem mit der Frequenz der Transformationselemente rotierenden $\alpha',\beta'$-System in das raumfeste System zurück, er liefert also das gleiche Ausgangssignal wie der Multiplizierer 4a', ohne daß dazu die Betragskoordinate

$$\overline{U'}$$

selbst benötigt würde.

Diese Betragskoordinate wird aber in einem kartesisch/polaren Koordinatenwandler 5a gebildet und kann am Ausgang 21 abgegriffen werden. Die Winkelkoordinate

$$\overline{\varphi'_{\alpha'}}$$

von

$$\overline{\underline{U}'_{\alpha'\beta'}}$$

kann zusammen mit dem Sollwert $\varphi^*$ direkt zur Bildung der Regelabweichung verwendet werden. Ferner ist zur Vorsteuerung der Transformationsfrequenz mit der gespeicherten Frequenz $f_0$ die Additionsstelle 16 zum besseren Verständnis in Figur 2 an den Ausgang des Integrators 9 gelegt und dient dazu, das Integrator-Ausgangssignal, das die Transformationsphase $\varphi_s$ der Frequenztransformationen bestimmt, mit dem Vorsteuerwinkel $\varphi_0$ vorzusteuern, der seinerseits mit dem gespeicherten Frequenzwert $f_0$ veränderlich sein muß und dessen Phase gegegebenfalls entsprechend der kurzfristigen Aufschaltung des Zusatz-Frequenzwertes $f_z$ um einen konstanten Zusatz-Phasenwinkel $\Delta_{\varphi z}$ verschiebbar sein kann.

Am Ausgang des Additionsgliedes 16 steht somit die Phase $\varphi_s$ der Transformationselemente an, die durch einen polar/kartesischen Wandler 10a entsprechend dem Funktionsgeber 10 in cos $\varphi_s$, sin $\varphi_s$ umgewandelt wird.

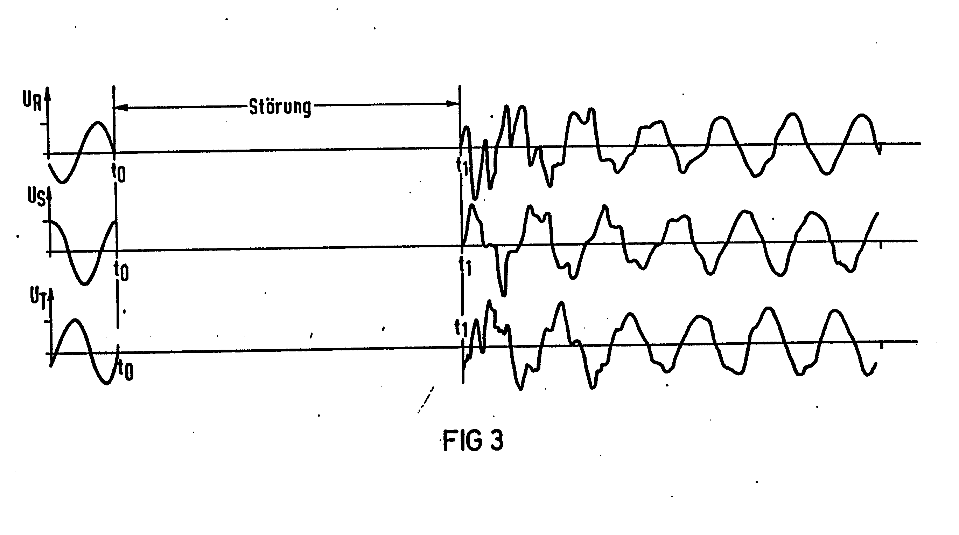

Die Funktionsweise der Anordnung wird anhand eines typischen Spannungsverlaufes mit einem Spannungseinbruch näher erläutert, wie er in Figur 3 für die drei Phasenspannungen $U_R$, $U_S$ und $U_T$ dargestellt ist. Man erkennt dabei, daß das Netz vor der Störung praktisch drei gegeneinander um 120° phasenverschobene Sinusschwingungen enthält (symmetrisches System), nach der Störung aber zunächst nicht nur mit starken abklingenden Oberschwingungen behaftet ist, sondern auch eine Unsymmetrie aufweist, die daran erkennbar ist, daß die einzelnen Spannungskurven nicht lediglich durch eine Phasenverschiebung auseinander hervorgehen.

Der 3/2-Wandler 1 und der dazu inverse 2/3-Wandler stellen den Zusammenhang zwischen den einzelnen Phasenspannungen und den kartesischen Vektorkomponenten dar, die diese Spannungen beschreiben, gemäß

$$\left. \begin{array}{l} U_\alpha = (2U_R - U_S - U_T)/3 \\[2ex] U_\beta = (U_S - U_T)/\sqrt{3} \end{array} \right\} \quad (1)$$

bzw.

$$\left. \begin{array}{l} U_R = U_\alpha \\[2ex] U_S = (-U_\alpha + \sqrt{3}\, U_\beta)/2 \\[2ex] U_T = (-U_\alpha + \sqrt{3}\, U_\beta)/2 \end{array} \right\} \quad (2)$$

Die polaren Koordinaten, d.h. Betrag und Winkel dieses Vektors, sind dabei gegeben durch

$$\left. \begin{array}{l} U = \sqrt{U_\alpha^2 + U_\beta^2} \\[2ex] \varphi_\alpha = \arctan(U_\beta/U_\alpha) \end{array} \right\} \quad (3)$$

Ein derartiges Rechenglied, das von kartesischen Koordinaten entsprechenden Eingangssignalen beaufschlagt ist und die polaren Koordinaten ermittelt, ist als kartesisch/ polarer "k/p-Wandler" bekannt und z. B. in der deutschen Offenlegungsschrift 28 16 661 beschrieben. Die hierzu inverse Umwandlung von polaren Koordinaten in kartesische Koordinaten kann durch einen p/k-Wandler gemäß der deutschen Offenlegungsschrift 28 16 614 vorgenommen werden.

Die Winkelkoordinate $\varphi_\alpha$ des durch $U_\alpha$ und $U_\beta$ beschriebenen Vektors $\underline{U}_{\alpha\beta}$ kann wegen $U_R = U\alpha$ als Phasenwinkel der Spannung $U_R$ bzw. als Phase des gesamten Netzspannungssystems aufgefaßt werden. Wird diese Phase des Netzspannungssystems weiterhin aufgefaßt als Winkel zwischen dem Ist-Vektor $\underline{U}_{\alpha\beta}$ und der Achse $\underline{\alpha}$ des kartesischen Koordinatensystem $\alpha$, $\beta$, so ist dadurch ein im Raum festliegendes Koordinatensystem bestimmt.

Zur Verdeutlichung der Arbeitsweise nach Figur 2 sei zunächst die ungestörte symmetrische Schwingung betrachtet und angenommen, daß die Vorrichtung am Ausgang 14 bereits Transformationselemente cos $\varphi_s$, sin $\varphi_s$ liefert, deren Transformationsphase $\varphi_s$ gegenüber der Phase des Netzes um eine durch den Sollwert $\varphi^*$ vorgegebene Phasendifferenz verschoben ist.

Im raumfesten $\alpha,\beta$-System stellen $\cos \varphi_s$, $\sin \varphi_s$ die kartesischen Komponenten eines Einheitsvektors $\underline{\alpha}'$ dar, der gegenüber der $\alpha$-Achse um den Transformationswinkel $\varphi_s$ gedreht ist. Da der Transformationswinkel mit der Transformationsfrequenz $f_s = 2 \pi d \varphi_s/dt$ veränderlich ist, stellt somit die Achse $\alpha'$ und eine dazu orthogonale Achse $\beta'$ ein gegenüber dem $\alpha,\beta$-System rotierendes Koordinatensystem dar. Der Vektordreher 2' bildet daraus die transformierten Orthogonalkomponenten

$$\left. \begin{array}{l} U_{\alpha'} = U_\alpha \cos \varphi_s + U_\beta \sin \varphi_s \\[2ex] U_{\beta'} = -U_\alpha \sin \varphi_s + U_\beta \cos \varphi_s \end{array} \right\} \quad (4)$$

Der dazugehörende transformierte Vektor $\underline{U}_{\alpha,\beta}$, beschreibt somit den gleichen physikalischen Zustand des Netzes, ein k/p-Wandler würde daher für die Betragskoordinate $\sqrt{U_{\alpha'}^2 + U_{\beta'}^2}$ die gleiche Netzspannungsamplitude U liefern und lediglich die Winkelkoordinate dieses transformierten Vektors ergibt sich jetzt gemäß $\varphi_{\alpha'} = \arctan U_{\beta'}/U_{\alpha'}$, durch den Winkel zwischen dem transformierten Vektor und der $\alpha'$-Achse.

Für das (als symmetrisch angenommene) ungestörte Netz im linken Teil der Figur 3 bilden also der 2/3-Wandler 1 und der Vektordreher 2' die Ausgangsgrößen

$$\left. \begin{array}{l} U_{RST} \text{ symmetrisch: } U_\alpha = U \cos \varphi_\alpha \\[1ex] \qquad\qquad\qquad \text{und} \qquad U_\beta = U \sin \varphi_\alpha \\[2ex] \qquad U_{\alpha'} = U \cos ( \varphi_\alpha - \varphi_s ) \equiv U \cos \varphi_{\alpha'} \\[1ex] \text{und} \quad U_{\beta'} = U \sin ( \varphi - \varphi_s ) \equiv U \sin \varphi_{\alpha'} \end{array} \right\} \quad (4a)$$

$$\text{mit} \quad \varphi_{\alpha'} \equiv \varphi_\alpha - \varphi_s$$

Der Vektor $\underline{U}_{\alpha\beta}$ rotiert also im $\alpha,\beta$-System gleichförmig, und wenn im stationären, abgeglichenen Zustand voraussetzungsgemäß die Transformationsphase $\varphi_s$ synchron mit der Netzphase $\varphi_\alpha$ ist, so liefert der Vektordreher 2' zwei konstante transformierte Orthogonalkomponenten. Die transformierte Netzphase $\varphi_{\alpha'}$ ist demnach konstant. Folglich ist das Glättungsglied 2' (z. B. jeweils ein Filter für jede Komponente) nicht belastet und die an dessen Ausgang anstehenden Mittelwerte sind gleich den Eingangswerten.

Der Vektordreher 4' transformiert nun diesen als "Mitsystem-Vektor" bezeichneten Vektor vom rotierenden $\alpha',\beta'$-System ins raumfeste $\alpha,\beta$-System zurück. Diese inverse Transformation entspricht der Transformation (4), wobei lediglich das Vorzeichen des Transformationswinkels $\varphi_s$ negativ ist, d.h. der Vektordreher 4' benötigt die gleichen Transformationselemente, wobei lediglich Zuordnung und Vorzeichen der Transformationselemente zu den entsprechenden Vektordrehereingängen verändert ist.

Bezeichnet man die Mittelwertbildung, die das Glättungsglied 3' vornimmt, durch Überstreichen der Eingangsgrößen, so kann man "orthogonale Mitsystemkomponenten"

$$\overline{U'_{\alpha'}}$$

und

$$\overline{U'_{\beta'}}$$

eines "Mitsystem-Vektors"

$$\underline{U'}_{\alpha' \beta'}$$

(bzw. die entsprechenden Polarkoordinaten

$$\overline{U'}, \quad \overline{\varphi'_{\alpha'}}$$

dieses Vektors) im $\alpha'$,$\beta'$-System definieren durch

$$\overline{U'_{\alpha'}} \equiv \overline{U \cdot \cos(\varphi_\alpha - \varphi_s)}, \quad \overline{U'_{\beta'}} \equiv \overline{U \cdot \sin(\varphi_\alpha - \varphi_s)}$$

bzw.

$$\overline{U'} \equiv \sqrt{\overline{U'_{\alpha'}}^2 + \overline{U'_{\beta'}}^2}, \quad \overline{\varphi'_{\alpha'}} \equiv \overline{\arctan(U'_{\beta'}/U'_{\alpha'})} \tag{5}$$

Der k/p-Wandler bildet also aus den Ausgangsgrößen des Glättungsgliedes 3' (d.h. den kartesischen Vektorkomponenten entsprechend den ersten Definitionsgleichungen) die entsprechenden polaren Vektorkomponenten (entsprechend der darunter aufgeführten kartesisch/polaren Koordinatenwandlung). Damit liefert der Koordinatenwandler 5a also für kleine Winkelwerte

$$(\overline{\varphi'_{\alpha'}} \cdot$$

$\approx$ O) den zum Nachführen des Transformationswinkels $\varphi_s$ benötigten Winkelistwert sin

$$\overline{\varphi'_{\alpha'}} \approx \overline{\varphi'_{\alpha'}},$$

der durch diese besondere Art der Mittelwertbildung aus den tatsächlichen Spannungen des Netzes gewonnen ist.

Der zweite Vektordreher 4' transformiert die kartesischen Komponenten

$$\overline{U'_{\alpha'}} \cdot$$

und

$$\overline{U'_{\beta'}}$$

dieses Vektors ins raumfeste $\alpha$,$\beta$-System zurück und bildet daher die raumfesten orthogonalen Komponenten

$$\overline{U'_\alpha} \cdot$$

und

$$\overline{U'_\beta} \cdot$$

des Mitsystems:

$$\left.\begin{array}{l} \overline{U'_\alpha} = \overline{U'} \cdot \cos(\overline{\varphi'_{\alpha'}} + \varphi_s) \\[2mm] \overline{U'_\beta} = \overline{U'} \cdot \sin(\overline{\varphi'_{\alpha'}} + \varphi_s) \end{array}\right\} \quad (6)$$

mit der raumfesten Winkelkoordinate

$$\overline{\varphi'_\alpha} = (\overline{\varphi'_{\alpha'}} + \varphi_s).$$

Für das symmetrische System nach (4a), für das $\varphi_\alpha - \varphi_s \equiv \varphi_{\alpha'} =$ const. vorausgesetzt ist, ergibt daher gemäß (5) das Filter 3' die Mittelwerte:

$$\overline{U'_{\alpha'}} = U \cdot \cos\varphi_{\alpha'} = \text{const.}$$

$$\overline{U'_\beta} = U \cdot \sin\varphi_{\alpha'} = \text{const.} \qquad (5a)$$

$$\overline{U'} = \sqrt{(U\cos\varphi_{\alpha'})^2 + (U\sin\varphi_{\alpha'})^2} = U$$

$$\overline{\varphi'_{\alpha'}} = \text{arc tan}\,(U\sin\varphi_{\alpha'}/U\cos\varphi_{\alpha'}) = \varphi_{\alpha'}$$

Der Vergleich mit (4a) zeigt also, daß der Mitsystem-Vektor

$$\overline{U'_{\alpha'\beta'}}$$

im $\alpha',\beta'$-System tatsächlich in Betrag

$$\overline{U'}$$

und Richtung

$$\overline{\varphi'_\alpha}$$

mit dem Vektor $\underline{U}_{\alpha'\beta'}$ des tatsächlichen Netzes übereinstimmt, wobei aufgrund der Regelbedingung

$$\overline{\varphi'_{\alpha'}}$$

$= \varphi^*$ für den abgeglichenen Zustand $\varphi_\alpha = \varphi^*$ gilt. Der zum Vektordreher 2' (Phasenverschiebung $\varphi_\alpha \to \varphi_{\alpha'} = \varphi_\alpha - \varphi_s$) inverse Vektordreher 4' (Phasenverschiebung

$$\overline{\varphi'_{\alpha'}} \longrightarrow \overline{\varphi'_\alpha} = \overline{\varphi'_{\alpha'}} + \varphi_s)$$

liefert daher

10

$$\varphi_\alpha = \overline{\varphi'_\alpha} = \varphi^* + \varphi_s$$

und

$$U_\alpha = \overline{U'_\alpha} = \overline{U'} \cdot \cos\overline{\varphi'_\alpha} = \overline{U'}\cos(\varphi^* + \varphi_s)$$

$$U_\beta = \overline{U'_\beta} = \overline{U'}\cdot\sin\overline{\varphi'_\alpha} = \overline{U'}\sin(\varphi^* + \varphi_s)$$

Tatsächlich geben daher die an den Ausgängen 14 oder 16 abgegriffenen Signale $\varphi_s$ bzw. $\underline{\varphi}_s = (\cos\varphi_s, \sin\varphi_s)$ die normierten Spannungen des Netzes mit der starren, vorgebbaren Phasenverschiebung $\varphi^*$ wieder. Der Multiplizierer 4a' der Figur 1 und der Vektordreher 4' der Figur 2 sind äquivalent bezüglich ihrer Ausgangssignale, die als Vektor

$$\overline{U'_{\alpha\beta}}$$

die entsprechenden, nicht normierten Netzspannungen beschreiben.

Die Netzfrequenz ist dabei durch die Transformationsfrequenz $f_s = 2\,d\,\varphi_s/dt$ gegeben und kann direkt am Integratoreingang 14a (Fig. 1) abgegriffen werden.

Zur Wirkungsweise des Stellgliedes für die Transformationselemente sei erläutert, daß die Bauelemente 9, 10 in Figur 1 bzw. 9, 10a in Figur 2 einen vorgesteuerten Vektoroszillator darstellen. Im Fall der Figur 1 bildet bei $f_z = o$ der Integrator 9 (z. B. ein frequenzgesteuerter Oszillator mit einem nachgeschalteten, rücksetzbaren Zähler) einen Winkel $\varphi_0 = 2\pi\int f_0 \times dt$, der von einem nachgeschalteten Funktionsgeber (z. B. einem Festwertspeicher) in $\sin\varphi_0$ und $\cos\varphi_0$ umgewandelt wird. Die Aufschaltung der Regelabweichung ($\varphi^*$-

$$\overline{\varphi'_\alpha})$$

bzw. (sin $\varphi^*$sin

$$\overline{\varphi'_\alpha})$$

bedeutet, daß diese Frequenz und somit der Winkel solange verändert wird, bis die Regelabweichung verschwindet. Der Regelverstärker 7, 8 bildet dann gerade das Signal $\Delta f = f_s - f_0$, durch die die Transformationselemente solange nachgestellt werden, bis

$$\overline{U'_{\alpha'\beta'}}$$

(d.h. der gemittelte transformierte Ist-Vektor) mit der $\varphi^*$-Richtung im rotierenden $\alpha'\,\beta'$-System (bzw. der rücktransformierte gemittelte Ist-Vektor mit der entsprechenden $\varphi^*$-Richtung im raumfesten Bezugssystem) übereinstimmt und somit Phasengleichheit zwischen den Transformationselementen (Transformationsphase $\varphi_s$) und der Netzgrundschwingung herrscht.

Bisher ist die Ermittlung der Grundfrequenz bei einem symmetrischen System beschrieben. Derartige symmetrische Systeme besitzen zwei Freiheitsgrade (Amplitude und Phase), wobei die einzelnen Spannungen dieses Spannungssystems auseinander nur durch eine Phasenverschiebung hervorgehen. Im allgemeineren Fall setzt sich die Grundschwingung des Netzspannungssystems (Grundfrequenz f̄) aber aus einzelnen harmonischen Schwingungen dieser Frequenz zusammen, die jeweils für sich zwei Freiheitsgrade besitzen, d.h. es gilt:

$$U_R = |U_R| \cos(2\pi \cdot \overline{F} \cdot t + \varphi_R)$$

$$U_S = |U_S| \cos(2\pi \cdot \overline{F} \cdot t + \varphi_S) \qquad \Bigg\} \qquad (7)$$

$$U_T = |U_T| \cos(2\pi \cdot \overline{F} \cdot t + \varphi_T)$$

Die vorausgesetzte Beziehung $U_R + U_S + U_T = 0$ reduziert die Zahl der Freiheitsgrade auf vier. Der 3/2-Wandler bildet dann zu dem Dreiphasensystem die beiden Orthogonalkomponenten $U_\alpha$ und $U_\beta$, die als Überlagerung zweier symmetrischer Systeme ("Mitsystem", Freiheitsgrade: Amplitude

$$\overline{U'},$$

Phase

$$\overline{\varphi'_\alpha};$$

"Gegensystem", Freiheitsgrade: Amplitude

$$\overline{U''},$$

Phase

$$\overline{\varphi''_\alpha})$$

aufgefaßt werden können. Durch

$$\dot{U}_\alpha = \overline{U'} \times \cos(2\pi \overline{F} t + \overline{\varphi'_\alpha}) + \overline{U''} \cos(-2\pi \overline{F} t - \overline{\varphi''_\alpha})$$

$$U_\beta = \overline{U'} \times \sin(2\pi \overline{F} t + \overline{\varphi'_\alpha}) + \overline{U''} \sin(-2\pi \overline{F} t - \overline{\varphi''_\alpha})$$

$$U_\alpha = \overline{U'_\alpha} + \overline{U''_\alpha} \qquad\qquad (8)$$

$$U_\beta = \overline{U'_\beta} + \overline{U''_\beta}$$

stellt sich also der Vektor $\underline{U}_{\alpha\beta}$ am Ausgang des Wandlers 1 als Vektorsumme zweier Vektoren

$$\overline{\underline{U'}_{\alpha\beta}}$$

und

$$\overline{\underline{U}''_{\alpha\beta}}$$

dar. Der Mitsystem-Vektor

$$\overline{\underline{U}'_{\alpha\beta}}$$

rotiert im $\alpha,\beta$-System in positiver Richtung, der Gegensystemvektor

$$\overline{\underline{U}''_{\alpha\beta}}$$

jedoch gegensinnig. Folglich liefert die Transformation (4) im Vektordreher 2' einen transformierten Ist-Vektor

$$\overline{\underline{U}_{\alpha'\beta'}}$$

als Vektorsumme zweier transformierter Vektoren. Der transformierte Mitsystem-Vektor ruht in diesem gleichsinnig rotierenden $\alpha'$, $\beta'$-System, seine transformierten Orthogonalkomponenten entsprechend also den vom Glättungsglied 3' gebildeten Mittelwerten. Der transformierte Gegensystemvektor rotiert jedoch im rotierenden $\alpha'$, $\beta'$-System gegensinnig und mit doppelter Frequenz, seine transformierten Orthogonalkomponenten werden also vom Glättungsglied 3' weggemittelt. Daher liefert das Glättungsglied 3' mit dem geglätteten Vektor

$$\overline{\underline{U}'_{\alpha'\beta'}}$$

tatsächlich im mitrotierenden $\alpha'$, $\beta'$-System das momentane Mitsystem, das nach Rücktransformation ins raumfeste $\alpha$, $\beta$-System den Mitsystem-Vektor

$$\overline{\underline{U}'_{\alpha\beta}}$$

angibt.

Soll jedoch z. B. für die Steuerung eines netzgeführten Umrichters die gesamte Grundschwingung nach (7) bzw. (8) ermittelt werden, so kann dies dadurch geschehen, daß der Ist-Vektor $\underline{U}_{\alpha\beta}$ auch in ein gegensinnig rotierendes Bezugssystem mit den Bezugsachsen $\alpha''$, $\beta''$ transformiert wird, wodurch ein transformierter Vektor $\underline{U}_{\alpha''\beta''}$ mit den transformierten Orthogonalkomponenten $U_{\alpha''}$ und $U_{\beta''}$ erhalten wird. Im $\alpha''$, $\beta''$-System besitzt nun das Gegensystem konstante Orthogonalkomponenten, entsprechend einem im Gegensystem ruhenden Gegensystemvektor

$$\overline{\underline{U}''_{\alpha''\beta''}}$$

während das Mitsystem Wechselgrößen darstellt, entsprechend einem mit doppelter Frequenz rotierenden Vektor

$$\overline{\underline{U}'_{\alpha''\beta''}} \cdot$$

Werden daher in einem nachgeschalten Glättungsglied diese Wechselanteile in den transformierten Orthogonalkomponenten $U_{\alpha''}$ und $U_{\beta''}$ weggemittelt, so werden die Orthogonalkomponenten

$$\overline{\underline{U}''_{\alpha''}}$$

und

$$\overline{\underline{U''}_{\beta''}}$$

des Gegensystem-Vektors im gegensinnig rotierenden $\alpha''$, $\beta''$-System erhalten. Eine nachfolgende Rücktransformation ins raumfeste Bezugssystem liefert dann den raumfesten Gegensystem-Vektor

$$\overline{\underline{U''}_{\alpha\beta}} \, ,$$

und die gesamte Grundschwingung kann durch den Summenvektor des auf die eingangs beschriebene Weise erhaltenen Mitsystem-Vektors

$$\overline{\underline{U'}_{\alpha\beta}}$$

und des auf die zuletzt beschriebenen Weise erhaltenen Gegensystemvektors

$$\overline{\underline{U''}_{\alpha\beta}}$$

beschrieben werden.

Die Transformation des Ist-Vektors $\underline{U}_{\alpha\beta}$ ins $\alpha''$, $\beta''$-System entspricht der Transformation (4) mit einem Transformationswinkel $-\varphi_s$. Dies ist genau die Transformation, die auch der bereits beschriebene Vektordreher 4' auszuführen hat, so daß für die Transformation ins $\alpha''$,$\beta''$-System ein derartiger Vektordreher mit den Transformationselementen cos $\varphi_s$,-sin $\varphi_s$ verwendet werden kann. Entsprechend ist die Rücktransformation aus dem $\alpha''$,$\beta''$-System ins raumfeste $\alpha,\beta$-System gleich der Transformation mittels des bereits beschriebenen Vektordrehers 2'. Die Figuren 1 und 2 zeigen mit den entsprechenden Vektordrehern 2'' und 4'' sowie dem dazwischengeschalteten Glättungsglied 3'' für die beiden transformierten Orthogonalkomponenten die nötigen Bausteine zur Ermittlung des Gegensystems, wobei das Additionsglied 19 die beiden Vektoren vektoriell addiert. Der 2/3-Wandler 20 liefert entsprechend der Beziehung (2) daraus die Einzelspannungen nach (8).

Die Gegensystem-Amplitude ist in der Regel nur klein gegenüber der Mitsystem-Amplitude. Daher bietet die Dimensionierung des Glättungsgliedes 3' zur Ermittlung des Mitsystems keine Schwierigkeiten. Jedoch muß das Glättungsglied 3'' die hohen, vom Mitsystem im $\alpha''$, $\beta''$-System erzeugten Schwingungen unterdrücken. Dies wird dadurch erleichtert, daß nicht die transformierten Orthogonalkomponenten des gesamten Ist-Vektors geglättet werden, sondern der zur Differenz zwischen Gesamtsystem und Mitsystem gehörende Vektor $\underline{U}_{\alpha'' \beta''}$

$$- \, \overline{\underline{U'}_{\alpha'' \beta''}} \, .$$

Diese vektorielle Differenz wird vorteilhaft bereits im raumfesten Bezugssystems durch das dem Vektordreher 2'' vorgeschaltete Subtraktionsglied 18 vorgenommen.

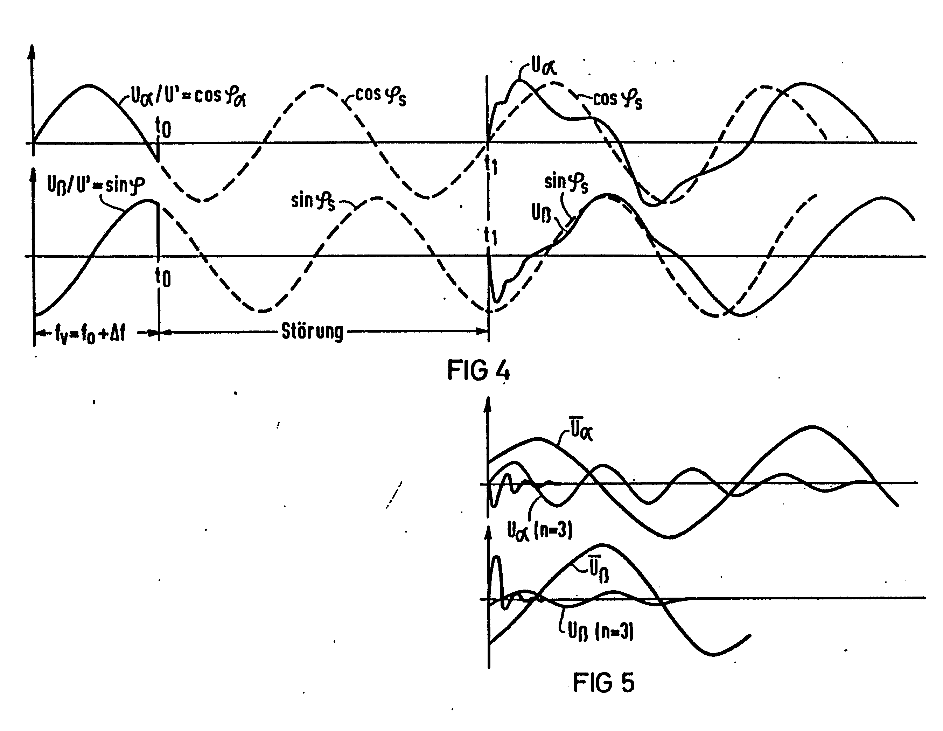

In Figur 4 ist für das in Figur 3 gezeigte Spannungssystem das Ausgangssignal des 3/2-Wandlers 1 (also die raumfesten Orthogonalkomponenten $U_\alpha$ und $U_\beta$ des Ist-Vektors $\underline{U}_{\alpha\beta}$) dargestellt, die zur besseren Übersichtlichkeit auf die ungestörte Amplitude (diese ist für das ungestörte, symmetrische Netz gleich der Mitsystem-Grundschwingungs- Amplitude

$$\overline{\underline{U'}})$$

normiert ist. Diese normierten Orthogonalkomponenten entsprechen bei symmetrischem Netz also Cosinus und Sinus des das ungestörte Netz beschreibenden Phasenwinkels. Dabei ist $\varphi^* = 0$ angenommen, d.h. die Rotationsfrequenz des rotierenden $\alpha'$,$\beta'$-Systems ist der Frequenz des Netzes so nachgeführt, daß die $\alpha'$-Achse phasenstarr mit dem Ist-Vektor $U_{\alpha\beta}$ rotiert. Daher sind die normierten Orthogonalvektoren im linken, ungestörten Bereich gleich den Transformationselementen. Zum Zeitpunkt $t = t_0$ meldet der Spannungswächter 13 den Zusammenbruch der Spannungsamplitude und die Steuereinrichtung 12 gibt ein Schaltsignal S zum Öffnen des Schalters 11. Die Frequenz der Transformationselemente ist somit nicht mehr von der Regelabweichung

$$\overline{\varphi'_{\alpha'}}.$$

$- \varphi^*$ bestimmt. Um jedoch den Vektordrehern der Vorrichtung bei Wiederkehr des Netzes sofort die benötigten Transformationselemente zur Verfügung zu stellen, wird während der Netzstörung die

14

Transformationsfrequenz mit einem für die Dauer der Netzstörung gespeicherten Frequenzwert gesteuert.

Dabei kann vorgesehen sein, daß die Steuereinrichtung 12 der Figur 1 bei Auftreten der Netzstörung den zuletzt am Frequenzsteuereingang des Vektoroszillators 9, 10 aufgetretenen Frequenzwert $f_s$, der zu diesem Zeitpunkt der tatsächlichen Grundfrequenz entspricht, speichert und diesen gespeicherten Wert für die Frequenzsteuerung der Transformationselemente während der Störung benutzt. Da dieser gesteuerte Betrieb nur während der Netzstörung benötigt wird, kann der Schalter 11 auch als Umschalter ausgebildet sein, der vom geregelten Betrieb (Frequenzsteuerung durch die Regelabweichung) auf den gesteuerten Betrieb (Frequenzsteuerung durch den gespeicherten Frequenzwert) umschaltet.

Einerseits genügt es aber, anstelle der vor der Störung zuletzt festgestellten Netz-Grundfrequenz einen für den Mittelwert der Netzfrequenz vorgegebenen Frequenzwert, insbesondere die Nennfrequenz, fest vorzugeben (Potentiometer 15). Andererseits kann dieser vorgegebene Frequenzwert auch im geregelten Betrieb dem Frequenzsteuereingang des Vektoroszillators 9, 10 aufgeschaltet werden, so daß bei vorhandenem Netz (geschlossener Schalter 11) nur die geringe Regelabweichung zwischen der Netzfrequenz und der Nennfrequenz ausgeregelt werden muß.

In Figur 4 ist mit gestrichelten Linien der Verlauf der Transformationselemente während der Störung dargestellt. Durch Betätigung des Schalters 11 zum Zeitpunkt $t_0$ entsteht zwar am Frequenzsteuereingang des Integrators 9 ein Frequenzsprung, so daß sich die Frequenz der gestrichelten Kurven gegenüber dem ungestörten Bereich verändert (dies ist in Figur 4 kaum bemerkbar), jedoch stehen bei Wiederkehr des Netzes (Zeitpunkt $t_1$) bereits Transformationselemente für die Vektordreher zur Verfügung, deren Transformationsfrequenz weitgehend der tatsächlichen Netzfrequenz entspricht. Allerdings setzt das wiederkehrende Netz mit einer gegenüber den Transformationselementen unkontrolliert veränderten Phasenlage wieder ein.

Die gestrichelten Linien der Figur 4 stellen für $t > t_1$ den Verlauf cos $\varphi_s$ und sin $\varphi_s$ für den Fall dar, daß die Nachführregelung bei Netzwiederkehr nicht eingeschaltet, also die Transformationselemente nicht auf die wiederkehrende Grundschwingung des Netzes synchronisiert werden. Dadurch wird deutlich, daß im eingeschwungenen Zustand des wiedergekehrten Netzes eine erhebliche Phasenverschiebung vorliegt, die teils dadurch hervorgerufen ist, daß nach der Netzstörung die Grundschwingung mit einer unbekannten Phase einsetzt, und die teils von der Abweichung der Netzfrequenz von der Nennfrequenz hervorgerufen ist, so daß sich im weiteren Verlauf eine ständig wachsende Phasenverschiebung ergibt.

Es sei betont, daß die für das wiederkehrende Netz dargestellten Orthogonalkomponenten jeweils den momentanen Netzzustand vollständig beschreiben, sie enthalten also zu jedem Zeitpunkt die vollständige Information über die Frequenzen, Phasenlagen und Amplituden der Grundfrequenz und aller Oberfrequenzen, die im wiederkehrenden Netz vorhanden sind.

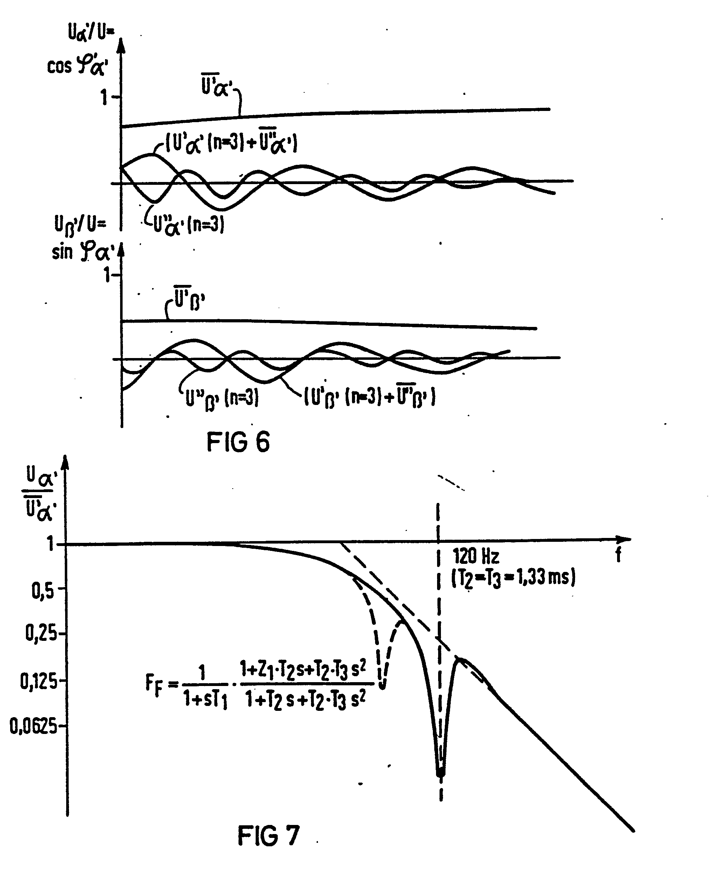

Figur 5 zeigt die im Netz vorhandene Grundfrequenz und die Oberschwingungen, von denen die Oberfrequenz der Ordnungszahl n = 3 sowie eine rasch abklingende Frequenz höherer Ordnung besonders ausgeprägt sind. Dabei zeigt die $\alpha$-Komponente der Oberschwingung n = 3 eine wesentlich höhere Amplitude als die $\beta$-Komponente. Der zugehörige raumfeste Vektor dieser Oberschwingung beschreibt also keine gleichmäßige Rotation mit einer kreisförmigen Ortskurve im $\alpha,\beta$-System, sondern eine Rotation mit elliptischer Ortskurve. Ursache hierfür ist, daß diese Oberschwingung in den einzelnen Phasenspannungen mit unterschiedlicher Amplitude und Phasenlage vorhanden ist, also ein stark unsymmetrisches System darstellt. Für die anderen Frequenzen sind derartige Unsymmetrien selbstverständlich ebenfalls möglich, jedoch in Figur 4 weniger deutlich sichtbar.

Wird zum Zeitpunkt $t_1$ der Netzwiederkehr der Schalter 11 nicht geschlossen, so rotiert das $\alpha',\beta'$-System mit Nennfrequenz weiter, wie dies die gestrichelten linien der Figur 4 anzeigen. In diesem Fall transformiert der Vektordreher 2' die Orthogonalkomponenten $U_\alpha$ und $U_\beta$ also in ein rotierendes $\alpha'$, $\beta'$-System, dessen $\alpha'$-Achse nicht in die Richtung des Vektors $\underline{U}_{\alpha\beta}$ fällt. Zerlegt man nun die vom Vektordreher 2' gebildeten, ins nicht-synchrone $\alpha',\beta'$-System transformierten Orthogonalkomponenten, so findet man zunächst einen Hauptanteil mit nur schwach veränderlichen Orthogonalkomponenten. Dies ist die Mitsystem-Grundschwingung des Netzes, die im $\alpha,\beta$-System durch

$$\overline{U'_\alpha} = \overline{U'} \cdot \cos \overline{\varphi'_\alpha} \quad \text{und} \quad \overline{U'_\beta} = \overline{U'} \cdot \sin \overline{\varphi'_\alpha}$$

gegeben ist und im nicht-synchron rotierenden $\alpha',\beta'$-System mit

$$\overline{U'_{\alpha'}} = \overline{U'} \cdot \cos (\overline{\varphi'_\alpha} - \varphi_s) = \overline{U'} \cdot \cos \overline{\varphi'_{\alpha'}} \quad \text{bzw.} \quad \overline{U'_{\beta'}} = \dots$$

erscheint und mit der Differenzfrequenz von Nennfrequenz und Netzfrequenz veränderlich ist. (Fig. 6).

Das Grundschwingungs-Gegensystem, das im raumfesten $\alpha,\beta$-System als ein mit Grundfrequenz gegensinnig rotierender Vektor

$$\overline{\underline{U}''_{\alpha\beta}}$$

erscheint, tritt im rotierenden $\alpha'$ $\beta'$-System als gegensinnig mit doppelter Frequenz rotierender Vektor auf. Gleichzeitig erscheint aber auch der zum Mitsystem der dritten Ordnung gehörende Vektor $\underline{U}'_{\alpha\beta}$ ($n = 3$), der im raumfesten $\alpha,\beta$ -System gleichsinnig mit dreifacher Geschwindigkeit rotiert und im rotierenden $\alpha'$, $\beta'$-System als ein Vektor $\underline{U}'_{\alpha'\beta'}$, ($n = 3$) auftritt, der nunmehr nur noch mit doppelter Frequenz rotiert. Daher fallen in Figur 6 der Grunschwingungs-Gegensystemvektor und der Oberschwingungs-Mitsystemvektor dritter Ordnung praktisch zusammen.

Ferner enthält Figur 6 natürlich auch den Oberschwingungs-Gegensystemvektor dritter Ordnung, der im rotierenden $\alpha'$ $\beta'$-System mit vierfacher Grundfrequenz rotiert. Oberfrequenzen höherer Ordnung sind in Figur 6 der besseren Verständigkeit wegen weggelassen.

Könnte das Zeitverhalten des Vektordrehers 2' und des Vektoranalysators 5 vernachlässigt werden und würde das Filter 3' bereits bei Netzwiederkehr wie im eingeschwungenen Zustand arbeiten, so würden am Ausgang des Glättungsgliedes bzw. des Vektoranalysators nur die zum Mitsystem-Grundschwingungsvektor gehörenden transformierten Orthogonalkomponenten

$$\overline{\underline{U}'_{\alpha'}}$$

und

$$\overline{\underline{U}'_{\beta'}}$$

erscheinen. Durch Schließen des Schalters 11 könnte dann sofort bei Netzwiederkehr die Phasennachführung eingeschaltet werden, wodurch die Transformationsfrequenz (Rotationsfrequenz des $\alpha'$, $\beta'$-Systems) allmählich so nachgestellt wird, daß die $\alpha'$-Achse synchron mit den Mitsystem-Vektor umläuft, also die dem sin

$$\overline{\varphi'_{\alpha'}} .$$

proportionale transformierte Mitsystem-Komponente

$$\overline{U'_{\beta'}}$$

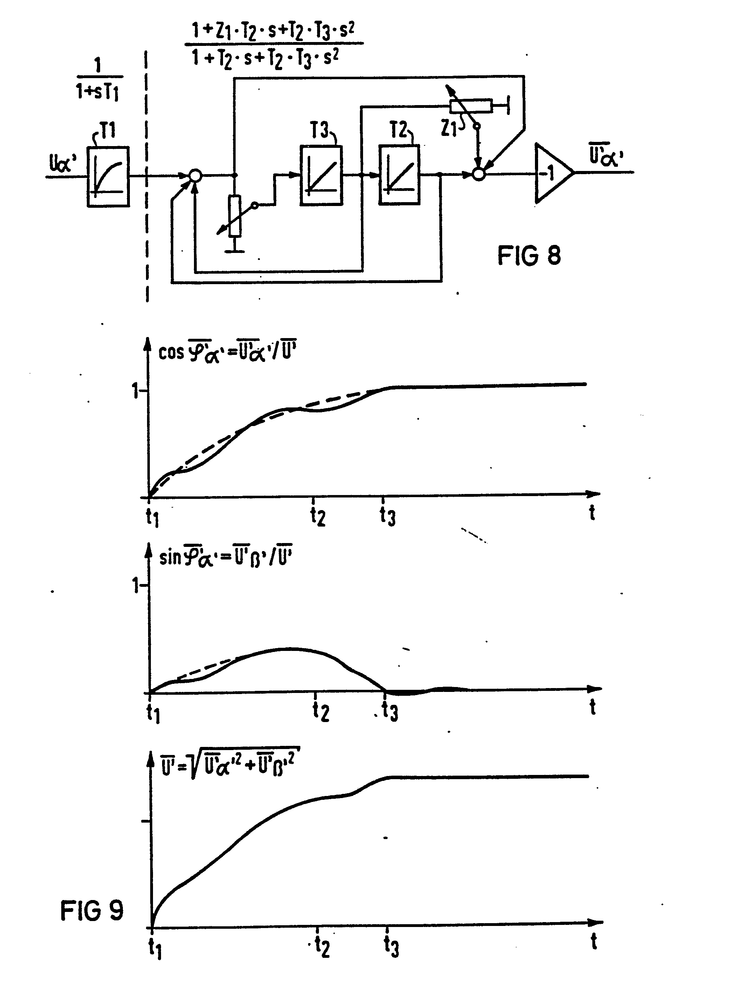

verschwindet (im folgenden ist stets $\varphi^* = 0$ vorausgesetzt). Da aber diese Idealisierung nicht vorliegt, ergeben sich die in Figur 9 dargestellten Verläufe, wobei der Schalter 11 erst nach dem Zeitpunkt $t_2$ geschlossen wird.

Der Vektordreher 2' braucht, wie (4) zeigt, nur Multiplikationen auszuführen und kann daher die Transformation innerhalb weniger Mikrosekunden ausführen. Daher stellen die Ausgangssignale des Vektordrehers 2' praktisch unmittelbar nach Netzwiederkehr die Überlagerung der in Figur 6 gezeigten Signale tatsächlich dar.

Das Glättungsglied 3' ist als Filter ausgebildet, das vor allem die in Figur 6 gezeigten Oberschwingungen unterdrücken muß. Je nach Einsatzgebiet der Anordnung sind bei Netzwiederkehr bestimmte Unsymmetrie und Oberschwingungsverhältnisse zu erwarten. Setzt das wiederkehrende Netz z. B. mit nur langsam abklingendem Grundschwingungs-Gegensystem ein, so muß das Filter 3' vor allem auf eine zweifache Grundfrequenz (entsprechend demim rotierenden $\alpha'$, $\beta'$-System gegensinnig rotierenden Gegensystemvektor) ausgelegt sein. Es kann aber auch der Fall auftreten, daß das Gtundschwingungs-Gegensystem verhältnismäßig gering ist bzw. schnell abklingt, dagegen Oberfrequenzen, die kein ganzzahliges Vielfaches der Netzfrequenz sind, besonders stören. Vorteilhaft ist das Filter so ausgelegt, daß es jeweils die kritischsten Oberschwingungen (in der Regel wenigstens die kritische Oberschwingung mit der niedrigsten Ordnungszahl) soweit abschirmt, daß deren vorhandene Restamplitude weniger als 2 % der Grundschwingungsamplitude beträgt. Meist genügt hierzu ein einfaches Nachgebeglied mit der komplexen Übertragungsfunktion $1/(1 + s \times T_1)$ nicht.

Figur 7 und Figur 8 zeigen Aufbau und Übertragungsfunktion eines bevorzugten Glättungsgliedes, das auf die Unterdrückung einer kritischen Oberschwingung bei 120 Hz abgestimmt ist. Dabei ist das erwähnte Nachgebeglied mit der Zeitkonstante $T_1 = 6,3$ ms auf eine Eckfrequenz von 25 Hz abgestimmt und läßt daher die transformierten Mitsystem-Komponenten, deren Frequenz nur die Differenz von Nennfrequenz und Netz-Grundfrequenz ist, praktisch unverändert durch. Ein nachgeschaltetes Filter mit der Übertragungsfunktion $(1 + Z_1 . T_2 . s + T_2 . T_3 . s^2)/(1 + T_2 . s + T_2 . T_3 . s^2)$ ist so dimensioniert, daß durch die Zeitkonstanten $T_2 = T_3 = 1,3$ ms und durch den Widerstand $Z_1$ sowohl Lage wie Breite und Tiefe der kritischen Frequenzunterdrückung (120 Hz) vorgegeben ist. Der angegebene Aufbau eines derartigen Filters ist für den Fachmann selbstverständlich und bedarf keiner weiteren Erläuterung. Sind mehrere kritische Frequenzen zu unterdrücken, so können selbstverständlich, wie dies im Amplitudengang der Figur 7 bei 50 Hz angedeutet ist, weitere ausgeprägte Frequenzunterdrückungen durch Nachschalten weiterer derartiger Filterglieder vorgenommen werden.

In Figur 9 ist mit unterbrochenen Linien für den Bereich der Netzwiederkehr für $t_1 \ldots t_2$ das Ausgangssignal des Filters 3' dargestellt. Die Ausgangssignale sind wiederum normiert auf die tatsächliche Mitsystem-Amplitude, und der exponentiell langsam ansteigende Signalverlauf zeigt, daß das Filter erst langsam auf die Werte cos

$$\overline{\varphi'_{\alpha'}} = \overline{\cos ( \varphi'_{\alpha} - \varphi_S)}$$

und sin

$$\overline{\varphi'_{\alpha'}} = \overline{\sin (\varphi'_{\alpha} - \varphi_S)}$$

einschwingt. Entsprechend der Differenzfrequenz zwischen dem Transformationswinkel $\varphi_s$ und der Grundschwingungsphase

$$\overline{\varphi'_{\alpha}}$$

wären im eingeschwungenen Zustand die Endwerte dieser Signale dann nur noch langsam veränderlich. Aus den tatsächlichen (d.h. nicht normierten) Ausgangssignalen

$$\overline{U'_{\alpha'}}$$

und

$$\overline{U'_{\beta'}}$$

des Filters 3' bildet nun der Vektoranalysator 5 den Betrag $\overline{U'} =$

$$\sqrt{\overline{U'_{\alpha'}}^2 + \overline{U'_{\beta'}}^2}$$

sowie die zur Winkelkoordinate

$$\overline{\varphi'_{\alpha'}}$$

gehörenden Winkelfunktionen cos

$$\overline{\varphi'_{\alpha'}}$$

sin

$$\overline{\varphi'_{\alpha'}}$$

Die Funktion des Vektoranalysators kann also aufgefaßt werden als ein k/p-Wandler, der aus den orthogonalen Komponenten die polare Betrags- und Winkelkoordinate bildet, wobei anschließend die Winkelkoordinate durch einen Sinus-Cosinus-Geber in die Winkelfunktionen umgeformt wird. Es ist jedoch einfacher, die Winkelfunktionen nicht über die Zwischenberechnung der Winkelkoordinate durchzuführen, sondern direkt zu berechnen. In der deutschen Offenlegungsschrift 29 19 786 ist eine Schaltung beschrieben, in der sowohl ein derartiger Vektoranalysator wie ein Vektordreher enthalten sind und die als Analogbaustein aus Pulsbreitenmultiplizierern aufgebaut ist. Die Pulsbreitenmultiplikation erfolgt hierbei zwar mit hoher Rechengeschwindigkeit, jedoch ist neben geringfügigen Glättungen beim Vektoranalysator eine Signalrückkopplung vorgesehen, um den für die Berechnung von Sinus und Cosinus erforderlichen Wert der Betragskoordinate zu bilden. Als Folge davon laufen beim Vektoranalysator zunächst Einschwingvorgänge ab, so daß das in Figur 9 als ausgezogene Linien dargestellte Winkelsignalpaar des Vektoranalysators zunächst nicht den idealisierten, gestrichelten Linien folgt, die sich durch das vom Filter bereitgestellte Eingangssignal ergeben sollten. Da allerdings der Vektoranalysator sehr viel schneller einschwingt als das Filter, zeigen sich diese Abweichungen praktisch nur im Zeitintervall $t_1 \ldots t_2$. Da die Winkelkoordinate durch

$$\overline{\varphi'_{\alpha'}}$$

$$= \text{arc tan}$$

$$\overline{U'_{\beta'}} \, / \, \overline{U'_{\alpha'}}$$

gegeben ist, hebt sich im Quotienten

$$\overline{U'_{\beta}} \, / \overline{U'_{\alpha}}$$

die Wirkung des langsamer einschwingenden Filters weg, so daß zum Zeitpunkt $t_2$ bereits eine zuverlässige Information über die momentane Phasenlage

$$\overline{\varphi'_{\alpha'}}$$

bezüglich der Transformationsphase $\varphi_s$ (bzw.

$$\overline{\varphi'_{\alpha}} = \overline{\varphi'_{\alpha'}}$$

$+$ $\varphi_s$ bezüglich der $\alpha$-Achse) gewonnen werden kann, obwohl die Ermittlung der Grundschwingungsamplitude selbst noch nicht zuverlässig ist. Da aber für die Nachführregelung, durch die die $\alpha'$-Achse der Richtung des Mitsystem-Vektors nachgeführt wird, nur von dieser Phasenlage

$$\overline{\varphi'_{\alpha'}}$$

abhängig ist, kann zum Zeitpunkt $t_2$ bereits die Nachführregelung zugeschaltet werden, d.h. der Schalter 11 wird geschlossen.

Figur 9 zeigt nun, wie infolge der Nachführregelung für $t > t_2$ die Transformationsphase entsprechend der Regelbedingung sin

$$\overline{\varphi'_{\dot{\alpha}'}}$$

$= \sin \varphi^* = 0$ ausgeregelt wird. Da die Anregelzeit des vorgesteuerten Phasenregelkreises sehr kurz gewählt werden kann, sind sehr bald die Endwerte cos

$$\overline{\varphi'_{\alpha'}}$$

$= 1$ und sin

$$\overline{\varphi'_{\alpha'}}$$

$= 0$ erreicht (Zeitpunkt $t_3$). Nach etwa 8 ms ist also der abgeglichene Zustand erreicht, bei dem der Transformationswinkel $\varphi_s$, der als Phasenlage des ermittelten Grundschwingungs-Mitsystems abgegriffen wird, synchron der tatsächlichen Phasenlage des tatsächlichen Grundschwingungs-Mitsystems des Netzes ist.

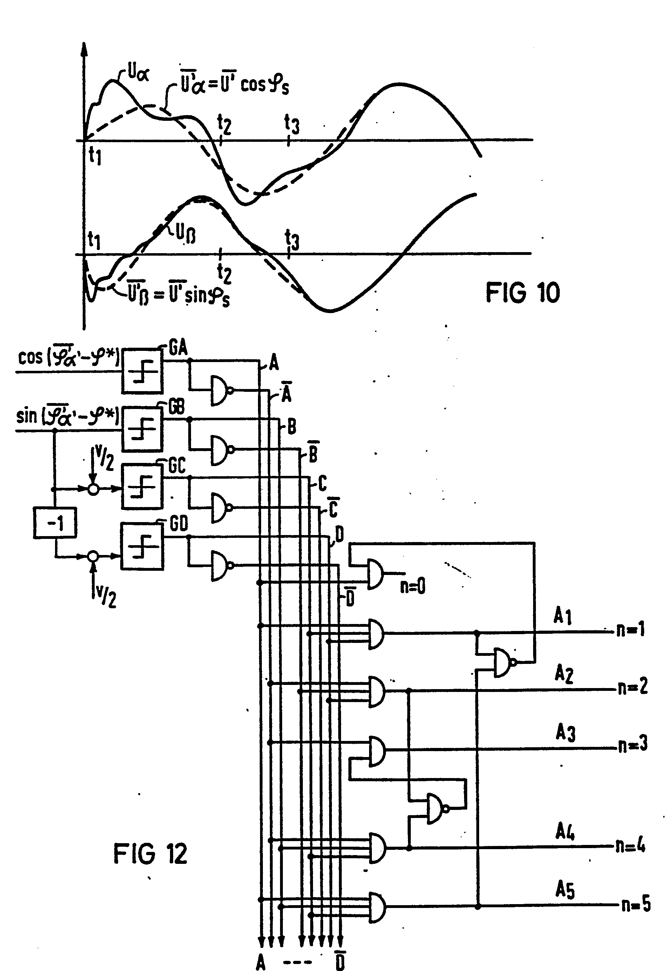

In Figur 10 ist mit der ausgezogenen Linie wieder das bereits in Figur 4 dargestellte Ausgangssignal des 2/3-Wandlers 1 wiederholt, jedoch sind diese raumfesten Orthogonalkomponenten $U_\alpha$ und $U_\beta$ nunmehr mit dem Ausgangssignal des Multiplizierers 4a' verglichen, also den Meßwerten für die raumfesten Orthogonalkomponenten

$$\overline{U'_\alpha}$$

und

$$\overline{U'_\beta} \ .$$

Im Bereich $t_1$ ... $t_2$ ist der Schalter 11 geöffnet, die Transformationselemente haben also den bereits in Figur 4 gestrichelt dargestellten Verlauf, aus dem durch Multiplikation mit dem Betragssignal des Vektoranalysators 5 die entsprechenden Meßwerte

$$\overline{U'_\alpha} = \overline{U'} \cdot$$

cos $\varphi_{s'}$

$$\overline{U'_\beta}$$

= ... entstehen. Da die Betragskoordinate infolge der erwähnten Einschwingvorgänge erst langsam ansteigt, ergeben sich für diesen Bereich die in Figur 10 gestrichelten Linien. In diesem Zeitbereich entsprechen diese Kurven einer Ortskurve des Vektors

$$\overline{U'_{\alpha\beta}} \ ,$$

dessen Länge entsprechend dem Einschwingen des Filters allmählich auf die tatsächliche Amplitude anwächst und dessen Richtung entsprechend dem Verhalten des Vektoranalysators um die durch den Transformationswinkel gegebene Richtung schwingt. Dabei steht der Transformationswinkel, der ja schließlich als Meßwert für die Phasenlage der Grundschwingung abgegriffen wird, zunächst noch in keiner Beziehung zum tatsächlichen Grundschwingungssystem.

Während der Anregelzeit $t_2$ ... $t_3$ des Phasenregelkreises wird jedoch der Transformationswinkel der tatsächlichen Phase des Grundschwingungssystems angeglichen. Daher laufen zum Zeitpunkt $t_3$ die Meßwerte in die Werte der tatsächlichen Orthogonalkomponenten des Grundschwingungs-Mitsystems ein. Abweichungen zwischen den ausgezogenen Linien für den tatsächlichen Spannungsverlauf und den gestrichelten Linien für die Meßwerte sind jetzt nur noch durch das Mitschwingungs-Gegensystem und die Oberschwingungen der Istwerte bedingt. Im Zeitintervall $t_2$ ... $t_3$ nähert sich daher die Ortskurve des durch die Meßwerte beschriebenen Vektors dem tatsächlichen Netzspannungsvektor in dem Maße, in dem der Phasenregelkreis die rotierende $\alpha'$-Achse auf die Richtung des Ist-Vektors einregelt.

Wie bereits erläutert wurde, steht zum Zeitpunkt $t_2$ durch den Quotienten

$$\overline{U'_{\beta'}} \ / \overline{U'_{\alpha'}} \ .$$

= tan

$$\overline{\varphi'_\alpha} \ ,$$

bereits eine zuverlässige Information über die Phasenlage des Mitsystems zur Verfügung. Es ist daher an sich zu diesem Zeitpunkt bereits möglich, zuverlässige Aussagen über die Nulldurchgänge der Netzspannung zu machen, was in vielen Fällen erwünscht ist. Wird insbesondere zum Zeitpunkt $t_2$ die momentane Phasendifferenz zwischen dem Ist-Vektor und den Transformationselementen gemessen und die Phase der Transformationselemente möglichst schnell um diesen Wert verändert, so bedeutet das, daß die $\alpha'$-Achse zu diesem Zeitpunkt praktisch sprungartig in die Richtung des Ist-Vektors gedreht wird. Das Signal sin

$$\overline{\varphi'_{\alpha'}} \ .$$

in Figur 9 würde für diesen Fall also sprungartig den Wert Null annehmen. Dadurch verkürzt sich die Anregelzeit des Phasenregelkreises wesentlich, der dann nur noch die Differenzfrequenz zwischen der gespeicherten, noch der Netzstörung benutzten Vorsteuerfrequenz $f_0$ und der Netzfrequenz auszuregeln braucht.

Für diesen Vorgang der Schnellsynchronisierung ist bei der Schaltung nach Figur 1 oder 2 der zusätzliche Frequenzwert $f_z$, bzw. der Zusatzwinkel $\Delta \varphi_z = 2\pi \int f_z \cdot dt$ vorgesehen.

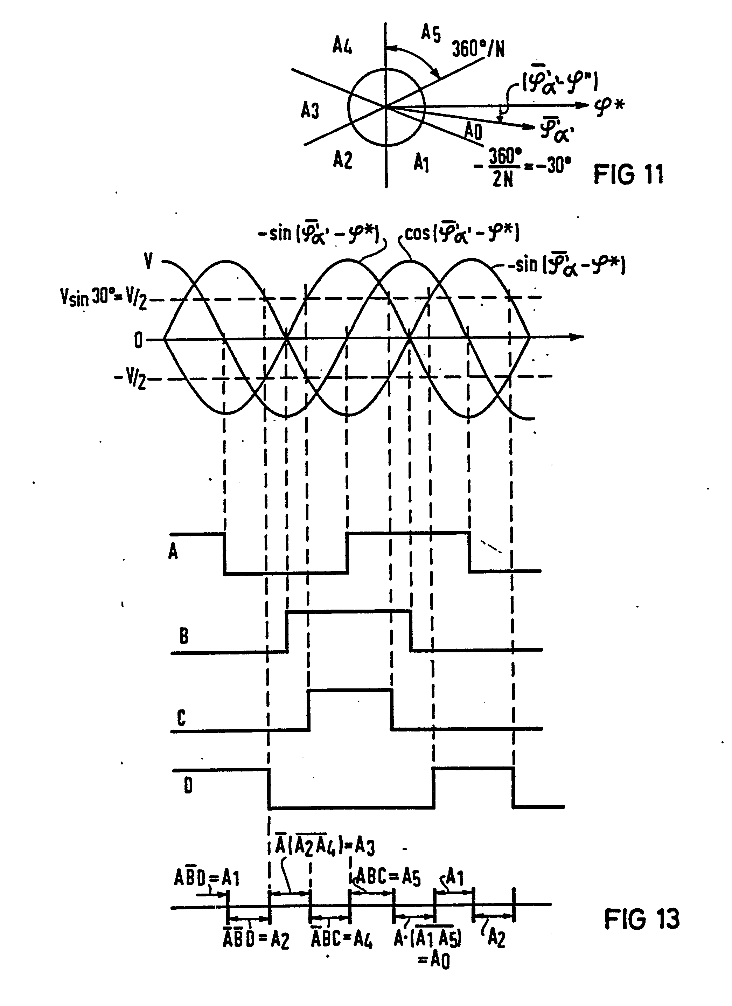

Im einzelnen wird dabei so vorgegangen, daß zusätzlich zur Regelabweichung ein quantisierter Wert der Regelabweichung gebildet wird und daß vorübergehend derart in die Steuerung oder Regelung der Transformationsfreuqenz eingegriffen wird, daß die Phase $\varphi_s$ der Transformationselemente um diesen quantisierten Wert verstellt wird. Dieser Vorgang wird von der Steuereinrichtung 12 gesteuert, was für eine Analogtechnik in den Figuren 11 bis 13 erläutert ist.

In Figur 11 ist mit $\varphi^*$ eine Richtung bezeichnet, die z. B. bei Vorgabe des Sollwertes $\varphi^* = O$ die Lage der $\alpha'$-Achse zum Zeitpunkt $t_2$ beschreibt. Da, wie oben ausgeführt wurde, der Vektoranalysator 5 zu diesem Zeitpunkt zwar noch nicht den tatsächlichen Betrag, aber mit der Winkelkoordinate

$$\overline{\varphi'_{\alpha'}}$$

bereits die tatsächliche Lage des Mitsystem-Vektors bezüglich der $\alpha$-Achse angibt, gibt eine Zerlegung des möglichen Bereiches für die Regelabweichung

$$\overline{\varphi'_{\alpha'}}$$

- $\varphi^*$ in sechs gleiche Bereiche $A_n$ (allgemein: in N-Bereiche der Breite $360°/N$) die Möglichkeit, der momentanen Regelabweichung als einen quantisierten Wert die Ordnungszahl n des jeweils angenommenen Bereiches vorzugeben. Der quantisierte Wert n ist demnach durch die Beziehung

$$\overline{\varphi'_{\alpha'}}$$

$$- \varphi^* - 360°/2N = n +$$

$$(\overline{\varphi'_{\alpha'}}$$

$- \varphi^*$) modulo $360°N$ gegeben.

Die dazugehörige Schaltung ist in Figur 12 dargestellt. Dabei sind die Ausgangssignale cos

$$\overline{\varphi'_{\alpha'}}$$

und sin

$$\overline{\varphi'_{\alpha'}}$$

des Vektoranalysators 5 Grenzwertmeldern GA, GB, GC und GD zugeführt, die entsprechend der Figur 13 die Signale A, B, C und D bilden. Die Ausgänge dieser Grenzwertmelder werden über eine logische Schaltung miteinander verknüpft, wobei diese Verknüpfungsschaltung jeweils für jeden Winkelbereich $A_1 \dots A_5$ einen eigenen Ausgang besitzt (ein dem Bereich $A_0$ zugeordneter Ausgang entsprechend der Regelabweichung Null ist nicht erforderlich).

Die logische Verknüpfung sorgt dabei dafür, daß jeweils nur an dem Ausgang ein Signal ansteht, der dem momentan besetzten Winkelbereich entspricht. Dadurch ist ein analoger Winkeldiskriminator 30 geschaffen.

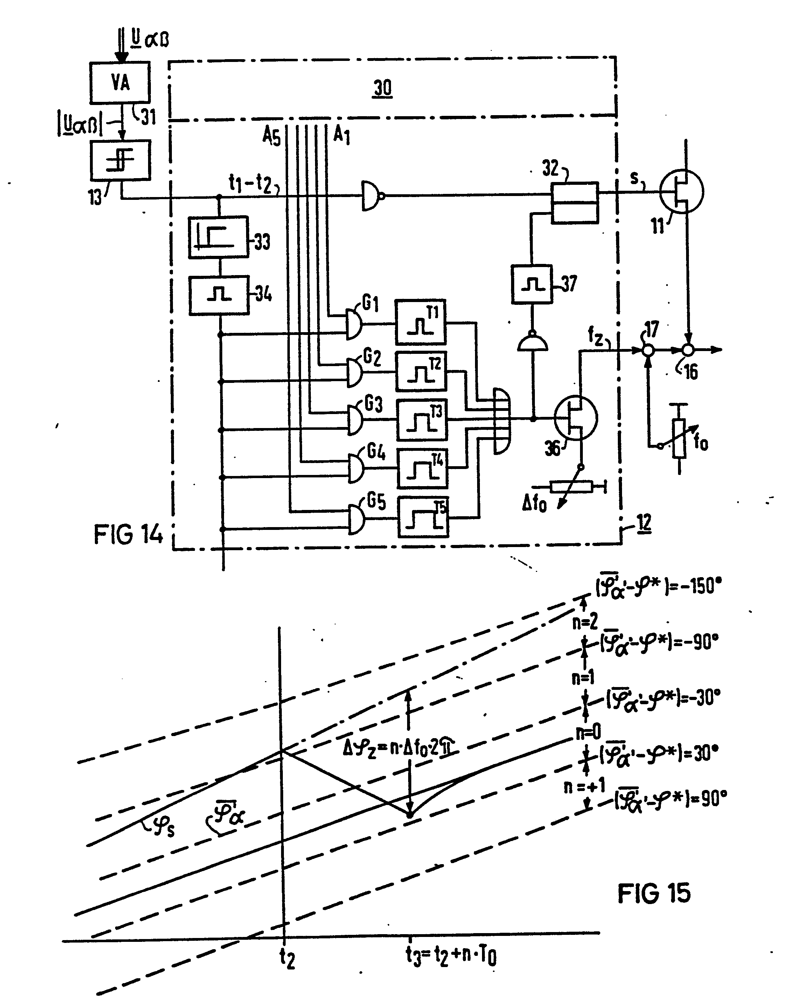

Figur 14 zeigt den weiteren Teil der Steuereinrichtung 12, in dem die Ausgangssignale $A_1$ bis $A_5$ dieses Winkeldiskriminators weiterverarbeitet werden.

Der Netzwächter 13 stellt z. B. durch Überwachung der Netzamplitude, wie sie etwa durch einen am 3/2-Wandler angeschlossenen Vektoranalysator 31 ermittelt werden kann, den Zusammenbruch des Netzes fest. Mit Verschwinden der Netzamplitude wird ein Kippglied 32 gesetzt, durch das der Schalter 11 geöffnet wird (Zeitpunkt $t_0$). Bei Netzwiederkehr stellt zunächst eine Verzögerungsstufe 33 sicher, daß eine z. B. zum Anlaufen des Vektoranalysators 5 nötige Zeit $t_1 \dots t_2$ abgewartet wird, bevor die Schnellsynchronisierung der Transformationselemente erfolgt. Ein Impulsformer 34 liefert dann zu diesem Zeitpnkt $t_2$ einen kurzen Impuls, durch den UND-Gatter $G_1 \dots G_5$ freigegeben werden, die mit den Ausgängen des Winkelsdiskrimenators 30 verbunden sind. Jeder Ausgang dieser Gatter ist mit je einem Zeitglied mit den Aktivierungszeiten $T_1 \dots T_5$ verbunden. Da zum Zeitpunkt $t_2$ nur der zum momentanen Winkelbereich gehörende Signalausgang $A_n$ ein Signal führt, wird also nur jeweils ein bestimmtes, dem jeweiligen Winkelbereich zuzuordnendes Zeitglied angestoßen. Die Zeitkonstanten $T_n$ sind dabei zu $T_n = n \cdot T_0$ gewählt. Ein ODER-Gatter 35 vereinigt die Ausgangssignale der Zeitstufen $T_1 \dots T_5$ zu einem Einschaltsignal für einen Schalter 36. Dieser Schalter 36 verbindet somit nur während des zum momentanen Winkelbereich $A_n$ gehörenden Zeitraums $n \cdot T_0$ eine

Konstantspannungsquelle mit einem Addierglied 17, an dem nunmehr der auf diese Weise gebildete zusätzliche Frequenzwert $f_z$ dem gespeicherten Frequenzwert $f_0$ aufgeschaltet wird.

Dadurch wird die Schnellsynchronisierung nach Netzwiederkehr also derart eingeleitet, daß zusätzlich zu der bei geöffnetem Schalter 11 durch den gespeicherten Wert $f_0$ vorgenommenen Frequenzsteuerung für die Dauer $n \times T_0$ der Zusatzwert $\Delta f_0 = f_z$ aufgeschaltet wird, so daß während dieser Zusatzaufschaltung die $\alpha'$-Achse beschleunigt rotiert und sich um einen Phasenwinkel $\Delta_{\varphi z}$ verschiebt. $T_0$ und $\Delta f_0$ sind dabei so aufeinander abgestimmt, daß sich jeweils während der Zeit $T_0$ der Phasenwinkel um 60°, also die Breite des zugehörigen Phasenbereiches der Figur 11, verschiebt. Es gilt also $\Delta_{\varphi z} = n \cdot 360°/N$.

Damit diese vorübergehende Verschiebung zum Zeitpunkt $t_2$ nicht durch den Phasenregelkreis gestört werden kann, ist vorgesehen, mittels eines weiteren Zeitgliedes 37, das erst beim Öffnen des Schalters 36 angestoßen wird (Zeitpunkt $t_3$), einen entsprechenden Rücksetzimpuls auf die Kippstufe 32 zu geben, die somit den während der Netzstörung geöffneten Schalter 11 wieder schließt. Somit setzt der Nachführregler erst ein, wenn nach Netzwiederkehr eine festgesetzte Schonzeit $t_1 \ldots t_2$ für das Einschwingen des Vektoranalysators 5 sowie die Schnellsynchronisierzeit $(t_3 - t_2)$ für die Verstellung der Transformationselemente um den Winkel $\Delta_{\varphi z}$ verstrichen ist.

Diesen Vorgang zeigt Figur 15, in der mit

$$\overline{\varphi'_\alpha}$$

der Winkel zwischen der raumfesten $\alpha$-Achse und dem tatsächlichen Mitsystem-Grundschwingungsvektor bezeichnet ist. Dieser Winkel

$$\overline{\varphi'_\alpha}$$

ändert sich mit der tatsächlichen Grundfrequenz. Da vor dem Zeitpunkt $t_2$ der Schalter 11 geöffnet ist, rotiert die $\alpha'$-Achse mit der gespeicherten Frequenz $f_0$ und schließt mit der $\alpha$-Achse den Winkel $\varphi_s$ ein. Die Regelabweichung

$$\overline{\varphi'_\alpha}{}'$$

- * beträgt, wenn durch den Sollwert $\varphi^* = 0$ als Bezugsachse für die Phasenregelung die $\alpha'$-Achse festgelegt ist, den Wert

$$\overline{\varphi'_\alpha}$$

- $\varphi_s$, sie liegt also im gezeigten Beispiel im Winkelbereich $n = -2$ entsprechend einem quantisierten Wert - 120° für die Regelabweichung.

Bedingt durch die zusätzliche Frequenzsteuerung im Zeitintervall $t_2 \ldots t_3$ läuft nunmehr die $\alpha'$-Achse mit veränderter (gegenläufiger) Rotationsgeschwindigkeit und der Winkel $\varphi_s$ ändert sich dabei um den quantisierten Wert $\Delta \varphi_z = -120°$. Zum Zeitpunkt $t_3$ wird durch den nunmehr über den Schalter 11 eingeschalteten Phasenregelkreis nur noch die verbleibende Restabweichung ausgeglichen.

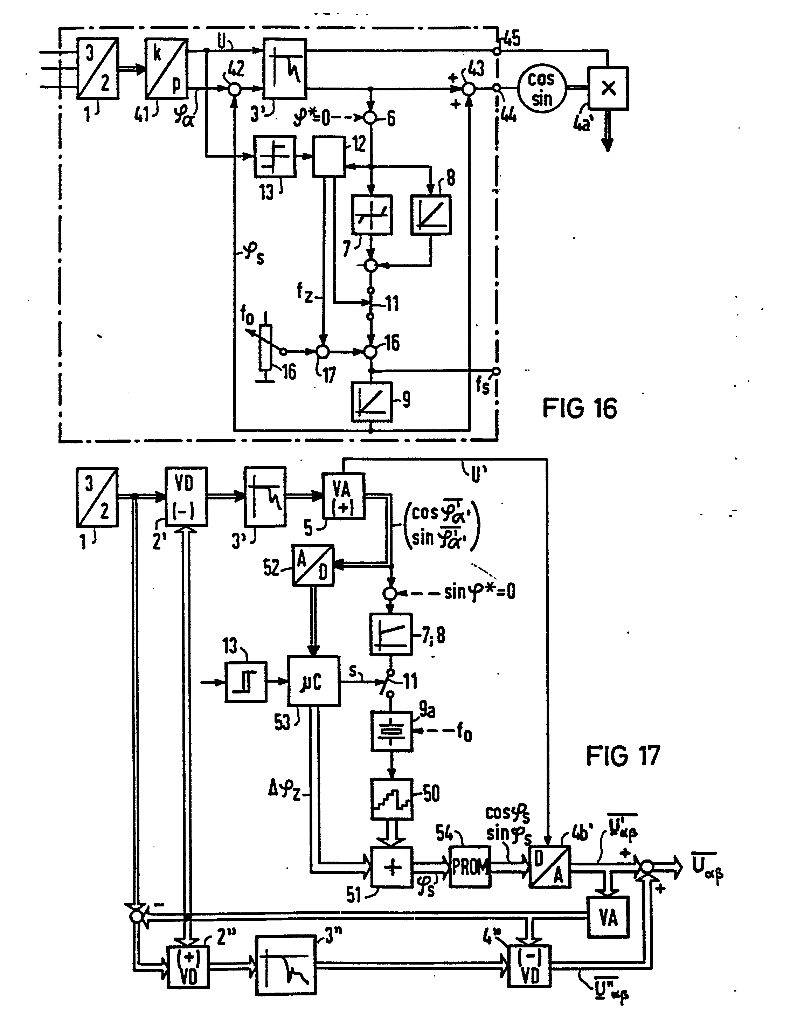

Figur 16 zeigt schematisch eine etwas vereinfachte Ausführungsform der Erfindung, bei der der vom 3/2-Wandler 1 erzeugte Ist-Vektor $\underline{U}_{\alpha\beta}$ nicht in kartesischen Koordinaten weiterverarbeitet wird, sondern mittels eines k/p-Wandlers 41 in seine Polarkoordinaten $U$ und $\varphi_\alpha$ umgewandelt wird. Die Transformation in das mit der Transformationsfrequenz $f_s$ rotierende Koordinatensystem erfolgt dabei dadurch, daß der Transformationswinkel $\varphi_s$ direkt von der Winkelkoordinate $\varphi_\alpha$ subtrahiert wird (Subtraktionsstelle 42). Die beiden Bauelemente 41 und 42 liefern den Ist-Vektor $\underline{U}_{\alpha\beta}$ nunmehr in Form seiner transformierten Polarkoordinaten ebenfalls im rotierenden $\alpha',\beta'$-System. Folglich wird dadurch die gleiche physikalische Information erhalten, wie durch den Vektordreher 2' in Figur 1, und würden diese Polarkoordinaten mittels eines p/k-Wandlers in orthogonale Komponenten umgewandelt, so würde das Glättungsglied 3' in beiden Fällen die gleichen Eingangs- und Ausgangsgrößen aufweisen, für ein nahezu symmetrisches Netz der Form $U_\alpha \approx U \cdot \cos \varphi_\alpha$, $U_\beta \approx U \sin \varphi_\alpha$ also die Eingänge $U_{\alpha'} \approx U \cos (\varphi_\alpha - \varphi_s)$, $U_{\beta'} \approx U \sin (\varphi_\alpha - \varphi_s)$ und die Ausgänge

$$\overline{U'_{\alpha'}} \approx \overline{U \cos (\varphi_\alpha - \varphi_s)}, \overline{U'_{\beta'}} \approx \overline{U \cdot \sin (\varphi_\alpha - \varphi_s)}.$$

Werden jedoch durch das Glättungsglied 3' die Polarkoordinaten geglättet, so ergibt dies einen Mittelwert

$$\overline{U^{l}}$$

für die Betragskoordinate, der letztlich nur die mittlere Amplitude des Netzspannungssystems beschreibt, also auch das Gegensystem enthalten würde. Daher ist diese Vorrichtung nur geeignet, wenn auf die Ermittlung des Gegensystems verzichtet werden kann (d.h. $\varphi_\alpha - \varphi_s \approx 0$ und

$$\overline{U\ \cos\ (\varphi_\alpha - \varphi_s)} \approx \overline{U^l}.$$

Der Mittelwert

$$\overline{(\varphi_\alpha - \varphi_s)},$$

d.h. die mittlere Winkelkoordinate im $\alpha'\beta'$-System, ist nur unter noch einschränkenderen Bedingungen

$$(\overline{\varphi_\alpha - \varphi_s} \approx \overline{\sin\ (\varphi_\alpha - \varphi_s)}, \ \overline{U^l} \approx \overline{U})$$

gleich der Winkelkoordinate

$$\overline{\varphi'_{\alpha I}}$$

des transformierten Mitsystem-Vektors, die entsprechend sin

$$\overline{\varphi'_{\alpha I}} \approx \overline{U\ \sin\ (\varphi_\alpha - \varphi_s)/U}$$

vom Vektoranalysator 5 der Figur 1 geliefert und ausgeregelt wird. Das Glättungsglied 3' liefert im Fall der Figur 16 also Mittelwerte, in denen gegenüber den Figuren 1 und 2 die dem Mitsystem überlagerten anderen Systeme unterschiedlich gewichtet sind, so daß sich nur in besonders einfachen Fällen die Mittelwerte der Polarkoordinaten des transformierten Ist-Vektors (Figur 16) und die Mittelwerte der transformierten Orthogonalkomponenten des Vektors (Figur 1 und 2) einander annähern.

Unter diesen vereinfachten Bedingungen kann die Rücktransformation des durch die Mittelung gebildeten Vektors einfach durch eine Addition des Transformationswinkels $\varphi_s$ und der gemittelten Winkelkoordinate an der Additionsstelle 43 gebildet werden. An den Klemmen 44 und 45 stehen in diesem Fall Werte an, die entsprechend den genannten Ungenauigkeiten Betrag und Phasenlage eines zum Netz ungefähr synchron umlaufenden Vektors beschreiben.

Werden anstelle der Polarkoordinaten dieses Vektors als Referenzspannungssystem Sinus und Cosinus des Phasenwinkels benötigt, so kann der Klemme 44 ein entsprechender Sinus-Cosinus-Geber nachgeschaltet werden. Die raumfesten kartesischen Koordinaten können im Bedarfsfalle durch einen nachgeschalteten Multiplizierer, entsprechend dem Multiplizierer 4a' in Figur 1, gebildet werden.

Da für die Transformationen zwischen dem $\alpha,\beta$-System und dem $\alpha',\beta'$-System nur der Transformationswinkel $\varphi_s$ selbst als Transformationselemente benötigt wird, ergibt sich, daß im Stellglied ein entsprechender, dem Integrator 9 nachgeschalteter Sinus-Cosinus-Geber überflüssig ist.

Da ferner als Regelabweichung direkt die Winkeldifferenz

$$\overline{\varphi'_\alpha} \cdot$$

$- \varphi^*$ verwendet wird, ergibt sich eine Möglichkeit, den zusätzlichen Eingriff in die Frequenzsteuerung zur Schnellsynchronisierung beim Zeitpunkt $t_2$ zu vereinfachen. Wird nämlich als Integrator in dem frequenzgesteuerten Stellglied ein frequenzgesteuerter Impulsgenerator verwendet und dessen Ausgangsimpulse von einem Zähler gezählt, der jeweils mit Erreichen des einem vollen Umlauf von 360° entsprechenden Winkels rückgesetzt wird, so ist als schnellsynchronisierender Zusatzeingriff zur Verschiebung des Transformationswinkels lediglich erforderlich, den Zählerstand durch Addition des Korrekturwinkels $\Delta_{\varphi z}$ einmalig zu verstellen. Der Winkeldiskriminator benötigt in diesem Fall lediglich einen Analog/Digital-Umsetzer, der aus dem Analogsignal für die Regelabweichung

$$\overline{\varphi'\alpha'}$$

- $\varphi^*$ den entsprechenden digitalen Winkel $\Delta_{\varphi z}$ bildet. Die Dauer $t_2 \ldots t_3$ für die Schnellsynchronisierung reduziert sich dadurch auf die Verarbeitungszeit des Umsetzers und der Winkeladdition am Zähler. Bei dieser Variante der Schnellsynchronisierung wird also praktisch in einem Schritt zum Zeitpunkt $t_2$ der Transformationswinkel um den digitalisierten Wert der Regelabweichung (für $\varphi^* = 0$ ist die Regelabweichung der Winkel zwischen dem gemittelten Netzspannungsvektor und der $\alpha'$-Achse) verstellt und der Phasenregelkreis braucht dann nur noch zu Beginn des geregelten Betriebes die Winkelungenauigkeit auszuregeln, die sich durch das Auflösungsvermögen des Umsetzers ergibt, während im geregelten Betrieb Phasenverschiebungen, die sich aus der Abweichung der Netzfrequenz von der Vorsteuerfrequenz $f_0$ ergeben, ausgeglichen werden.

Diese digitalisierte Variante der Schnellsynchronisierung kann auch auf die Vorrichtung nach Figur 1 angewendet werden. Als Integrator 9 ist hierbei z. B. ein spannungsgesteuerter Quarzoszillator verwendet. Quarzoszillatoren besitzen eine hervorragende Frequenzkonstanz, die lediglich durch Anlegen einer zusätzlichen Steuerspannung in gewissen Grenzen verändert werden kann. Der Quarzoszillator schwingt im ungesteuerten Zustand mit der konstanten Frequenz $f_0$, auf die ein nachfolgender Impulszähler so abgestimmt ist, daß er jeweils bei dem einer vollen Periode der Nennfrequenz entsprechenden Zählerstand zurückgesetzt wird. Daher ist für die erwähnte digitale Schnellsynchronisierung nur erforderlich, aus dem Signalpaar cos

$$\overline{\varphi'\alpha'} \, ,$$

sin

$$\overline{\varphi'\alpha'}$$

am Winkelsignalausgang des Vektoranalysators mittels eines k/p-Wandlers die Winkelkoordinate selbst zu ermitteln (für $\varphi^* = 0$ also die Regelabweichung) und mittels eines Analog/Digital-Umsetzers zu digitalisieren. Zum Zeitpunkt $t_1$ kann dann dieser digitale Werte einem Volladdierer am Ausgang des Zählers aufgeschaltet werden.

Da ein Vektoranalysator funktionsmäßig ein k/p-Wandler zur Bildung von Betrag und Winkel sowie ein nachgeschalteter Sinus/Cosinus-Geber zur Umwandlung des Winkels in die Winkelfunktionen ist, kann bei der soeben beschriebenen Anordnung letztlich ein k/p-Wandler alleine verwendet werden, um aus den Ausgangssignalen des Glättungsgliedes 3' direkt die zur Digitalisierung verwendete Winkelkoordinate zu bilden. Da jedoch Vektoranalysatoren gegenwärtig leichter realisierbar sind als k/p-Wandler, ist bei dem bevorzugten Ausführungsbeispiel der Figur 17 vorgesehen, den Vektoranalysator beizubehalten. Die Komponente sin

$$\overline{\varphi'_{\alpha'}}$$

am Winkelsignalausgang des Vektoranalysators wird einerseits direkt als Istwert dem Nachführregler 7, 8 aufgeschaltet, dagegen werden beide vom Vektoranalysator gelieferten Winkelfunktionen einem Analog/Digital-Umsetzer 52 zugeführt. Die Umwandlung der Winkelfunktionen in den entsprechenden Winkel selbst, wird in diesem Fall digital durch einen Mikrocomputer 53 durchgeführt. Diese digitale Winkelbildung ist zwar ebenfalls eine k/p-Wandlung, die jedoch wegen der normierten Eingangsspannungen leicht durchführbar ist. Der Mikrocomputer 53 ist jeweils nur dann in Tätigkeit, wenn der Netzwächter 13 Anfang und Ende einer Netzstörung meldet und daher der Schalter 11 auf die bereits beschriebene Weise betätigt werden muß.

Der Integrator 9 der Figur ist durch den erwähnten Quarzoszillator 9a, dessen Grundfrequenz $f_0$ ist, mit dem nachgeschalteten Zähler 50 ersetzt. Der Datenbus am Ausgang des Mikrocomputers gibt nur zum Zeitpunkt $t_1$ einen einmaligen Impuls auf den Addierer 51, der gerade dem digitalen Wert der Winkelkoordinate

$$\overline{\varphi'_{\alpha'}}$$

entspricht und die erwähnte Nachstellung des Transformationswinkels bewirkt. Der Zähler 51 adressiert mit dem digitalen Winkel $\varphi_s$ den Festwertspeicher 54, dessen Ausgangsgrößen cos $\varphi_s$, sin $\varphi_s$ mittels eines multiplizierenden Digital/Analog-Umsetzers 4b' in die Analogsignale

$$\overline{U'_\alpha} \; , \; \overline{U'_\beta} \; ,$$

entsprechend dem Ausgangssignal des Multiplizierers 4a' in Fig. 1, umgewandelt und zusammen mit den Komponenten

$$\overline{U''_\alpha} \; , \; \overline{U''_\beta}$$

des Gegensystems weiterverarbeitet werden.

Dadurch wird das Zeitintervall $t_2 \dots t_3$ in Figur 15 wesentlich verkürzt.

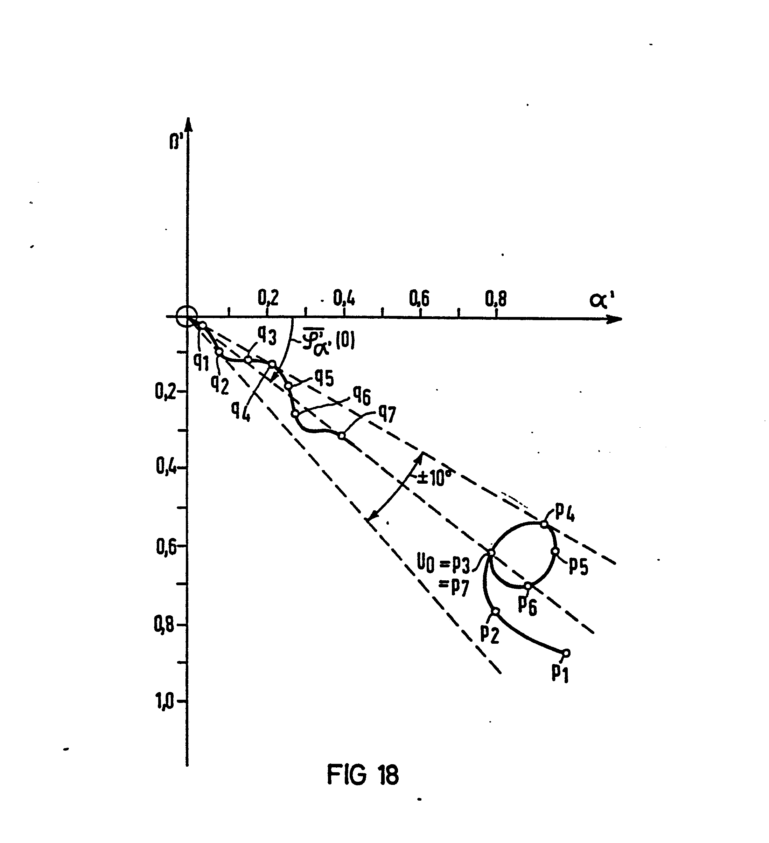

In Figur 18 ist die Ortskurve des durch die Ausgangssignale der gesamten Vorrichtung beschriebenen Vektors dargestellt. Dieser Ortskurve nach Figur 18 ist das $\alpha'$, $\beta'$-System zugrundegelegt, das zu diesem Zeitpunkt wegen des noch geöffneten Schalters 11 mit der Nennfrequenz $f_0$ rotiert. Innerhalb der ersten 7 ms enthält der Vektor $U_{\alpha\beta}$ des tatsächlichen Netzes eine Grundfrequenz, die im Vergleich zum Transformationselement $\cos \varphi_s$ durch einen mit

$$\overline{\varphi'_{\alpha'}}$$

(O) bezeichneten Differenzwinkel beschrieben werden kann, wobei sich dieser Differenzwinkel nur mit der Differenz zwischen der Nennfrequenz und der tatsächlichen Netz-Grundfrequenz ändert. Mit $U_O$ ist der zu diesem praktisch konstanten Differenzwinkel

$$\overline{\varphi'_{\alpha'}}$$

(O) gehörende, durch cos

$$\overline{\varphi'_{\alpha'}}$$

(O) und sin

$$\overline{\varphi'_{\alpha'}}$$

(O) gegebene Grundzustand des Netzes beschrieben, der praktisch also den normierten, zur tatsächlichen Netzgrundschwingung gehörenden Ist-Vektor angibt. Die bei Netzwiederkehr vorhandenen Oberschwingungen bewirken, daß der tatsächliche Ist-Vektor $\underline{U}_{\alpha\beta}$ sich innerhalb dieser ersten 7 ms um diesen Punkt $U_O$ herum bewegt. Die Aufgabe der erfindungsgemäßen Vorrichtung besteht nun darin, die Grundschwingung zu finden, also aus dieser Bewegung des tatsächlichen Ist-Vektors den Punkt $U_O$ zu ermitteln.

Die Punkte $p_1 \dots p_7$ geben nun die Endpunkte des Vektors wieder, der durch die Ausgangssignale des Vektoranalysators 5 jeweils $1 \dots 7$ ms nach Netzwiederkeht festgelegt ist. Zu diesem Zeitpunkt ist der Schalter 11 in Figur 17 noch geöffnet. Würde der Vektoranalysator ideal arbeiten, wie dies anhand der gestrichelten Linien in Figur 9 erläutert wurde, so würden diese Punkte bereits mit dem Punkt $U_O$ praktisch zusammenfallen, da die Eingänge des Vektoranalysators entsprechend dem Einschwingen des Filters 3' praktisch exponentiell ansteigen, sich dieser exponentielle Anstieg durch die Quotientenbildung

$$\overline{U'_{\beta'}} \; / \; \overline{U'_{\alpha'}}$$

in der Winkelkoordinate

$$\overline{\varphi'_{\alpha'}}$$

$= \text{arc tan}$

$$\overline{U'_{\beta'}} / \overline{U'_{\alpha'}}$$

weghebt. Das Einschwingen des Vektoranalysators 5 jedoch bewirkt, daß sich diese Punkte $p_1$ ... $p_7$ auf der dargestellten Ortskurve dem zu ermittelnden tatsächlichen Punkt $U_O$ nähern. Innerhalb der ersten 7 ms schwankt also der durch die Punkte $p_1$ ... $p_7$ gegebene Winkel nur um etwa 10° um den tatsächlichen Wert $U_O$, der bereits nach kurzer Zeit (im Beispiel: 7 ms) praktisch exakt ermittelt ist.

Somit ist bereits nach 7 ms der Zeitpunkt $t_2$ erreicht, bei dem der Schalter 11 geschlossen wird. Dies wirkt sich so aus, daß die $\alpha'$-Achse im raumfesten System wegen der hohen Rechengeschwindigkeit des Mikrocomputers 53 praktisch sofort um den zum Punkt $p_7$ gehörenden Winkel sprunghaft verschoben wird, die $\alpha'$-Achse zu diesem Zeitpunkt also mit dem tatsächlichen Netzvektor zusammenfällt. Da jetzt die Nachführregelung eingeschaltet wird, bewegt sich fortan die $\alpha'$-Achse synchron mit dem tatsächlichen Vektor der Grundschwingung, wobei die Oberschwingungen ausgefiltert sind. Das Transformationselement $\cos \varphi_s$ beschreibt dann die auf die tatsächliche Mitsystem-Grundschwingungsamplitude normierte Mitsystem-Grundschwingung der Phasenspannung $U_R$ bzw. des Netzspannungssystems. Um von diesen normierten Werten auf die tatsächliche Grundschwingung zu kommen, wird im Digital/Analog-Wandler 4b' der Figur 17 jeweils das entsprechende Transformationselement mit der vom Vektoranalysator 5 ermittelten Betragskoordinate multipliziert. Zum Zeitpunkt $t_7$ ergibt sich demnach ein erfaßter Grundschwingungsvektor

$$\overline{U'_{\alpha\beta}},$$

der mit dem tatsächlichen Vektor in seiner Richtung übereinstimmt, dessen Betrag

$$\overline{U'}$$

jedoch noch in dem Maße von dem tatsächlichen Grundschwingungsvektor abweicht, wie das noch einschwingende Filter 3' einen noch fehlerhaften Meßwert

$$\overline{U'}$$

für die tatsächliche Grundschwingungsamplitude liefert. Um nun den Punkt $p_7$, der den auf die tatsächliche Amplitude U normierten momentanen Ist-Vektor $\underline{U}_{\alpha\beta}$ repräsentiert, mit dem Ausgang des Wandlers 4b' vergleichen zu können, ist daher mit dem Punkt $q_7$ der Endpunkt des auf die gleiche tatsächliche Amplitude normierten Vektors

$$\overline{U'_{\alpha\beta}}$$

dargestellt. Die gleiche Renormierung auf den tatsächlichen Betrag des tatsächlichen Vektors liefert für die Punkte $p_1$ ... $p_6$ die Punkte $q_1$ ... $q_6$ Für $t > t_2$ zeigen die Ausgangsgrößen des Wandlers 4b' einen praktisch geradlinig auf den zu erfassenden (tatsächlichen) Punkt $U_O$ führenden Verlauf.

Da hierbei schon sehr frühzeitig $t_2$ erreicht ist, bei dem die Transformationselemente synchron mit der Mitsystem-Grundschwingung sind, sind schon sehr frühzeitig Frequenz, Phasenlage und Nulldurchgänge der Mitsystem-Grundschwingung erfaßt. Da durch die phasensynchronen Transformationselemente dann auch die Arbeitsweise des Glättungsgliedes 3' sowie der Bauelemente 2'', 3'', 4'' erleichtert wird, die zur Ermittlung des Gegensystems notwendig sind, ist somit innerhalb weniger Millisekunden die vollständige Information über die Grundschwingung des Netzes erhalten.

**Patentansprüche**

1. Verfahren zum Ermitteln eines netzsynchronen Referenzspannungsvektors

$$(\underline{U_{\alpha\beta}})$$

für einen Steuersatz eines netzgeführten Stromrichters, insbesondere bei einem nach einer Netzstörung mit Oberschwingungen behafteten Wechselspannungsnetz, mit folgenden Verfahrensschritten bei vorhandenem Wechselspannungsnetz:
- die Phase der Referenzspannung ist gegeben durch einen mit steuerbarer Frequenz rotierenden

Transformationsvektor ($\varphi_s$; cos $\varphi_s$, sin $\varphi_s$), der mit dem Netzspannungsvektor synchronisiert ist;

- der aus Meßwerten ($U_{RST}$) des Wechselspannungsnetzes gewonnene raumfeste Netzspannungsvektor (Fig. 1 und 2: $\underline{U}_{\alpha\beta}$; Fig. 16: U $_{\varphi\alpha}$) wird durch eine Frequenztransformation mit Hilfe des Transformationsvektors ($\varphi_s$) in zwei frequenztransformierte Komponenten (Fig. 1 und 2: $\underline{U}_{,\alpha'\beta'}$) überführt (Fig. 1 und 2: Vektordreher 2'; Fig. 16: Subtraktionsstelle 42);

- die frequenztransformierten Netzspannungskomponenten werden geglättet (Glättungsglied 3'), und es wird eine Winkelkoordinate

$$(\overline{\varphi'_{\alpha'}})$$

aus den geglätteten Komponenten bestimmt (Fig. 1: Vektoranalysator 5; Fig. 2: kartesisch/polarer Wandler 5a; Fig. 16: Winkelausgang des Glättungsgliedes 3');

- die Frequenz des Transformationsvektor ($\varphi_s$; cos $\varphi_s$, sin $\varphi_s$) wird auf eine verschwindende Regelabweichung (Fig. 2:

$$\overline{\varphi'_{\alpha'}}$$

- $\varphi^* = 0$) zwischen der aus den frequenztransformierten Komponenten abgeleiteten Winkelkoordinate

$$(\overline{\varphi'_{\alpha'}})$$

und einem vorgegebenen Phasen-Sollwert ($\varphi^*$) ausgeregelt (Fig. 1, 2 und 16: Regelverstärker 7, 8; Stellglieder 9 und 10 bzw. 10a);

- als netzsynchroner Referenzspannungsvektor wird entweder der auf konstante Amplitude genormte Transformationsvektor (Fig. 1 und 2: cos $\varphi_s$, sin $\varphi_s$, Ausgang 14) abgegriffen oder es werden die durch eine zur ersten Frequenztransformation inverse Frequenztransformation in das raumfeste System rücktransformierten (Fig. 2: Vektordreher 4') geglätteten Netzspannungs-Komponenten

$$(\overline{U'_{\alpha}}, \overline{U'_{\beta}})$$

abgegriffen (Fig. 2);

sowie mit folgenden Verfahrensschritten im Falle einer Netzstörung:

- die Frequenz des Transformationsvektors wird bei abgeschalteter Phasenregelung mit einem für die Dauer der Netzstörung gespeicherten Frequenzwert ($2\pi x f_0 = d\varphi_0/dt$) gesteuert;

- es wird nach Wiederkehr des Wechselspannungsnetzes die Phasenregelung (7 bis 10a) eingeschaltet (Schalter 11).

2. Verfahren nach Anspruch 1, dadurch gekennzeichnet, daß die orthogonalen kartesischen Koordinaten (Fig. 1 und 2: $U_\alpha$, $U_\beta$) des Netzspannungsvektors der Frequenztransformation und anschließenden Glättung unterworfen werden zur Bildung von orthogonalen frequenztransformierten Mitsystem-Komponenten ($U'_{\alpha'}$, $U'_{\beta'}$).

3. Verfahren nach Anspruch 1, dadurch gekennzeichnet, daß die polaren Koordinaten (Fig. 16: U, $\varphi_\alpha$) des Netzspannungsvektors der Frequenztransformation und der anschließenden Glättung unterworfen werden.

4. Verfahren nach einem der Ansprüche 1 bis 3, dadurch gekennzeihnet, daß die Frequenz des Transformationsvektors bei vorhandenem Wechselspannungsnetz mit einem für den Mittelwert der Netzfrequenz vorgegebenen Frequenzwert (Fig. 1 und Fig. 16: $f_0$) vorgesteuert wird.

5. Verfahren nach Anspruch 2, dadurch gekennzeichnet, daß durch eine zur ersten Frequenztransformation inverse, zweite Frequenztransformation (Vektordreher 2'') und Glättung (Glättungsglied 3'') auch die orthogonalen frequenztransformierten Gegensystem-Komponenten

$$(\overline{U''_{\alpha''}}, \overline{U''_{\beta''}})$$

gebildet und durch eine zur zweiten Frequenztransformation inverse Transformation (Vektordreher 4'') rücktransformiert werden und daß als netzsynchroner Referenzspannungsvektor die Überlagerung (Additionsglied 19) des rücktransformierten Mitsystems

$$(\underline{U'_{\alpha\beta}})$$

und des rücktransformierten Gegensystems

$$(\overline{\underline{U}''_{\alpha\beta}})$$

abgegriffen ist.

6. Verfahren nach Anspruch 5, <u>dadurch gekennzeichnet</u>, daß der zweiten Frequenztransformation das Differenzsystem ($\underline{U}_{\alpha\beta}$-

$$\overline{\underline{U}'_{\alpha\beta}})$$

aus den raumfesten Wechselspannungskomponenten und dem rücktransformierten Mitsystem unterworfen wird.

7. Verfahren nach einem der Ansprüche 1 bis 6, <u>dadurch gekennzeichnet</u>, daß zur Glättung ein Nachgebeglied und ein auf die Unterdrückung kritischer Oberschwingungen abgestimmtes Filter verwendet wird, wobei diese Glättung auf einen Amplitudenfaktor weniger etwa 2 % für die niedrigste kritische Oberschwingung abgestimmt ist (Fig. 7, 8).

8. Verfahren nach einem der Ansprüche 1 bis 7, <u>dadurch gekennzeichnet</u>, daß die Regelabweichung mit einer für steigende Werte überproportional anwachsenden Regelkreisverstärkung ausgeregelt wird (Fig. 1 und Fig. 2: Regelverstärker 7).

9. Verfahren nach einem der Ansprüche 1 bis 8, <u>dadurch gekennzeichnet</u>, daß zusätzlich zur Regelabweichung ein quantisierter Wert (Fig 17: $\Delta_{\varphi z}$) der Regelabweichung gebildet wird und daß vorübergehend derart in die Steuerung oder Regelung der Transformationsfrequenz eingegriffen wird, daß die Phase ($\varphi_s$) des Transformationsvektors um den quantisierten Wert ($\Delta_{\varphi z}$) verstellt wird.

10. Verfahren nach Anspruch 9, <u>dadurch gekennzeichnet</u>, daß erst nach Ablauf einer vorgegeben Verzögerungszeit (Fig.9 und Fig. 10: $t_1 - t_2$) nach Ende ($t_1$) einer Netzstörung mit dem quanisierten Wert vorübergehend auf die Steuerung der Transformationsfrequenz eingegriffen wird und die Phasenregelung eingeschaltet wird.

11. Verfahren nach Anspruch 10, <u>dadurch gekennzeichnet</u>, daß die Phasenregelung erst nach Beendigung des Eingriffs eingeschaltet wird.

12. Verfahren nach Anspruch 11, <u>dadurch gekennzeichnet</u>, daß mit der Regelabweichung die Frequenz von Zählimpulsen für einen Zähler gesteuert wird, daß der quantisierte Wert der Regelabweichung durch Digitalisierung gebildet wird, daß zum vorübergehenden Eingriff in die Transformationsfrequenz die digitalisierte Regelabweichung zum Zählerstand addiert wird, und daß der Zählerstand als Digitalwert für die Phase der Transformationsvektors verwendet wird (Fig. 17).

13. Verfahren nach Anspruch 9, 10 oder 11, <u>dadurch gekennzeichnet</u>, daß der quantisierte Wert n durch Vorgabe einer ganzen Zahl N gemäß einer Regelabweichung

$$\overline{\varphi'_\alpha}\,{}_{,}$$

$$- \varphi^* - 360°/2N = n +$$

$$(\overline{\varphi'_\alpha}\,{}_{,}$$

$- \varphi^*$) modulo 360°/N gebildet wird und daß als Eingriff in die Steuerung ein zusätzlicher Frequenzwert $f_z$ entsprechend $\int_{\Delta t} f_z \times dt = n$ für die Dauer $\Delta t$ für die Frequenzsteuerung vorgegeben wird (Fig. 11 bis 15).

14. Vorrichtung zur Durchführung des Verfahren nach einem der Ansprüche 2 und 4 bis 11, soweit diese auf Anspruch 2 rüchbezogen sind, enthaltend (Fig. 2):

a) ein Netzerfassungsglied (1) zur Bildung zweier orthogonaler raumfester Wechselspannungskomponenten,

b) einen ersten Vektordreher (2') zur Transformation der raumfesten Komponenten in ein rotierendes Bezugssystem,

c) ein erstes Glättungsglied (3') für die transformierten Komponenten zur Bildung der transformierten Mitsystem-Komponenten,

d) einen Phasendifferenz-Bildner zur Bildung der Regelabweichung zwischen der Phase

$$(\overline{\varphi'_\alpha}\,{}_{,})$$

der transformierten Mitsystem-Komponenten und einem vorgegebenen Phasen-Sollwert ($\varphi^*$),

e) ein dem Phasendifferenz-Bildner nachgeschaltetes Stellglied (9, 10a) zur Bildung der raumfesten Komponenten einer Bezugsachse des rotierenden Bezugssystems, die als frequenzveränderliche Transformationselemente dem Winkelsignal-Eingang des ersten Vektordrehers zugeführt werden,

f) einen Umschalter (11) zwischen dem Phasendifferenz-Bildner und dem Stellglied (9, 10a), durch den die Frequenzvorgabe der Transformationselemente umschaltbar ist zwischen einer Steuerung mit einem gespeicherten Frequenzwert bei Netzstörung und einer Regelung, durch die nach Wiederkehr des Wechselspannungsnetzes die vom Phasendifferenz-Bildner gebildete Regelabweichung

$$(\overline{\varphi'_{\alpha i}} - \varphi^*)$$

ausgeregelt werden kann und

g) Mittel (14 bzw. 4'), durch die entweder die frequenzveränderlichen Transformationselemente oder die den mit der Amplitude des Mitsystems gewichteten Transformationselementen entsprechenden rücktransformierten Mitsystem-Komponenten als netzsynchrones Referenzspannungssystem abgegriffen werden.

15. Vorrichtung nach Anspruch 14, gekennzeichnet durch eine Subtraktionsstufe (18) zur komponentenweisen Subtraktion der rücktransformierten Mitsystem-Komponenten von den von der Netzerfassungseinrichtung gelieferten raumfesten Wechselspannungsnetz-Komponenten, einen zweiten, von den Transformationselementen beaufschlagten Vektordreher (2'') zur Transformation in ein entgegengesetzt rotierendes Bezugssystem, ein nachgeschaltetes zweites Glättungsglied (3'') zur Bildung der orthogonalen transformierten Gegensystemkomponenten, einen weiteren Vektordreher (4'') zur Rücktransformierung der transformierten Gegensystemkomponenten ins raumfeste Bezugssystem, und ein Additionsglied (19) zur komponentenweisen Addition der rücktransformierten Gegensystemkomponenten und der rücktransformierten Mitsystem-Komponenten.

16. Vorrichtung nach Anspruch 14 oder 15, dadurch gekennzeichnet, daß der Phasendifferenzbildner einen Vektoranalysator (5) zur Bestimmung der Amplitude

$$(\overline{U^i})$$

und der auf das rotierende Bezugssystem bezogenen Phase

$$(\overline{\varphi'_{\alpha i}})$$

der Mitsystem-Komponenten enthält, daß das Stellglied einen integrierenden Sinus-Cosinus-Generator, insbesondere mit einem von der Regelabweichung frequenzgesteuerten Oszillator (9a) mit einem nachgeschalteten, einen Sinus-Cosinus-Geber steuernden Zähler (50), enthält, und daß eine vom Amplitudenausgang des Vektoranalysators (5) und den Funktionsausgängen (54) des Sinus-Cosinus-Funktionsgebers beaufschlagtes Multiplizierglied (4b') die rücktransformierten Mitsystem-Komponenten im raumfesten Bezugssystem bildet (Fig. 17).

17. Vorrichtung nach Anspruch 16, dadurch gekennzeichnet, daß der Sinus-Cosinus-Generator einen bei freier Oszillation auf den gespeicherten Frequenzmittelwert abgestimmten, bei eingeschalteter Phasenregelung von der Regelabweichung spannungsgesteuerten Quarzoszillator (9a) zur Ansteuerung des Zählers (50) enthält.

18. Vorrichtung nach einem der Ansprüche 14 bis 17, dadurch gekennzeichnet, daß ein Winkeldiskriminator zur Bildung eines zusätzlichen quantisierten Wertes $(\Delta_{\varphi z})$ der Regelabweichung, vorzugsweise ein Analog/Digital-Umsetzer (52), vorgesehen ist und daß Mittel (51) vorgesehen sind, durch die nach Beendigung der Netzstörung die Phase der Transformationselemente um den quantisierten Wert verstellt wird (Fig. 17).

## Claims

1. A method of determining a network-synchronous reference voltage vector

$$(\underline{U}_{\alpha\beta})$$

for a control set of a network-piloted converter, in particular in an a.c. voltage network subject to harmonic oscillations following a network failure, comprising the following process steps in the present a.c. voltage network:

- the phase of the reference voltage is governed by a transformation vector ($\varphi_s$; cos $\varphi_s$ sin $\varphi_s$, which rotates with a controllable frequency and which is synchronised with the mains voltage vector;
- the spatially stable network voltage vector (Fig. 1 and 2: $\underline{U}_{\alpha\beta}$; Fig 16: U, $_{\varphi\alpha}$) which is obtained from measured values ($U_{RST}$) of the a.c. voltage network is converted by frequency transformation with the assistance of the transformation vector ($\varphi_s$) into two frequency-transformed components (Fig. 1 and 2: $\underline{U}_{\alpha'\beta'}$) (Fig. 1 and 2: vector rotator 2'; Fig. 16: subtraction location 42);

- the frequency-transformed mains voltage components are smoothed (smoothing element 3') and an angle coordinate

$$(\overline{\varphi'\alpha'})$$

is determined from the smoothed components (Fig. 1: vector analyser 5; Fig. 2: cartesian/polar transformer 5a; Fig. 16: angle output of the smoothing element 3');
- the frequency of the transformation vector ($\varphi_s$; cos $\varphi_s$ sin $\varphi_s$) is regulated to an imperceptible regulation deviation (Fig. 2: $\varphi'\alpha'- \varphi^* = 0$) between the angle coordinate ($\varphi'$ $\alpha'$), derived from the frequency-transformed components, and a predetermined phase theoretical value ($\varphi^*$) (Fig. 1, 2 and 16: regulating amplifiers 7, 8; control elements 9, 10 and 10a);
- by way of network-synchronous reference voltage vector, either the transformation vector standardised to a constant amplitude is tapped (Fig. 1 and 2; cos $\varphi_s$, sin $\varphi_s$, output 14) or the smoothed network voltage components

$$(\overline{U'_\alpha} \, , \, \overline{U'_\beta} \,)$$

which have been re-transformed (Fig. 2: vector rotator 4') into the spatially stable system by a frequency transformation which is inverse to the first frequency transformation (Fig. 2);
and comprising the following process steps in the event of a mains failure:
- when the phase regulation is de-actuated, the frequency of the transformation vector is controlled by a frequency value ($2\pi$ x$f_0 = d\varphi_0/dt$) which is stored for the duration of the mains failure;
- when the a.c. voltage network is re-established, the phase regulation (7 to 10a) is activated (switch 11).

2. A method as claimed in claim 1, <u>characterised in</u> that the orthogonal cartesian coordinates (Fig. 1 and 2: U$\alpha$, U$\beta$) of the network voltage vector are subjected to frequency transformation followed by smoothing in order to form orthogonal, frequency-transformed co-system components (U'$\alpha'$, U'$\beta'$).

3. A method as claimed in claim 1, <u>characterised in</u> that the polar coordinates (Fig. 16: U,$\varphi\alpha$) of the mains voltage vector are subjected to frequency transformation followed by smoothing.

4. A method as claimed in one of the claims 1 to 3, <u>characterised in</u> that in the present a.c. voltage network the frequency of the transformation vector is preliminarily controlled by a frequency value which is predetermined for the mean value of the mains frequency (Fig. 1 and 16: fo).

5. A method as claimed in claim 2, <u>characterised in</u> that by means of a second frequency transformation (vector rotator 2''), which is inverse to the first frequency transformation, and smoothing (smoothing element 3''), the orthogonal frequency-transformed counter-system components

$$(\overline{U''_{\alpha n}}, \; \overline{U''_{\beta n}})$$

are formed and are re-transformed by means of a transformation which is inverse to the second frequency transformation (vector rotator 4'') and that the superimposition (addition element 19) of the re-transformed co-system

$$(\overline{\underline{U}'_{\alpha\beta}})$$

and of the re-transformed counter-system

$$(\overline{\underline{U}''_{\alpha\beta}})$$

is tapped as network-synchronous reference voltage vector.

6. A method as claimed in claim 5, <u>characterised in</u> that the difference system ($\underline{U}_{\alpha\beta}$-

$$\overline{\underline{U}'_{\alpha\beta}})$$

composed of the spatially stable a.c. voltage components and the re-transformed co-system is subjected to the second frequency transformation.

7. A method as claimed in one of the claims 1 to 6, <u>characterised in</u> that a relaxation component and a filter which is tuned to the suppression of critical harmonic oscillations are used for smoothing purposes, where this smoothing is adapted to an amplitude factor of less than approximately 2 % for the lowest critcal harmonic oscillation (Figs. 7, 8).

8. A method as claimed in one of the claims 1 to 7, <u>characterised in</u> that the regulation deviation is levelled with a regulating circuit amplification which increases super-proportionally for increasing values (Fig. 1 and 2: regulating amplifier 7).

9. A method as claimed in one of the claims 1 to 8, <u>characterised in</u> that in addition to the regulation deviation, a quantised value (Fig. 17:$\Delta_{\varphi z}$) of the regulation deviation is formed and that temporary intervention into the control or regulation of the transformation frequency takes place in such manner that the phase ($\varphi_s$) of the transformation vector is adjusted by the quantised value ($\Delta_{\varphi z}$).

10. A method as claimed in claim 9, <u>characterised in</u> that not until the expiration of a predetermined delay time (Fig. 9 and 10: $t_1$ - $t_2$), at the end ($t_1$) of a network failure is a temporary intervention into the control of the transformation frequency effected with the quantised value, and the phase regulation is activated.

11. A method as claimed in claim 10, <u>characterised in</u> that the phase regulation is not activated until the end of the intervention.

12. A method as claimed in claim 11, <u>characterised in</u> that the frequency of counting pulses for a counter is controlled by the regulation deviation, that the quantised value of the regulation deviation is formed by digitalisation, and that for the temporary intervention into the transformation frequency the digitalised regulation deviation is added to the count, and that the count is used as digital value for the phase of the transformation vector (Fig. 17).

13. A method as claimed in claim 9, 10 or 11, <u>characterised in</u> that the quantised value n is formed by specifying a whole number N in accordance with a regulation deviation

$$\overline{\Psi'_{\alpha_1}}$$

$- \varphi^* - 360°/2N = n +$

$$(\overline{\Psi'_{\alpha_1}}$$

$- \varphi^*$) modulo $360°/(N$ and that an additional frequency value $f_z$ corresponding to $\int_{\Delta t} f_z \times dt = n$ is specified as intervention into the control for the duration $\Delta t$ for the frequency control (Fig. 11 to 15).

14. A device for carrying out the method claimed in one of the claims 2 and 4 to 11, where these relate to claim 2, including (Fig. 2):

a) a network pick-up element (1) which forms two orthogonal, spatially stable a.c. voltage components,

b) a first vector rotator (2') which transforms the spatially stable components into a rotating reference system,

c) a first smoothing element (3') for the transformed components which forms the transformed co-system components,

d) a phase difference former which forms the regulation deviation between the phase

$$(\overline{\Psi'_{\alpha_1}})$$

of the transformed co-system components and a predetermined phase theoretical value ($\varphi^*$),

e) a control element (9, 10a) which is connected to the output end of the phase difference former and which forms the spatially stable components of a reference axis of the rotating reference system, which are fed, as frequency-variable transformation elements, to the angle signal input of the first vector rotator,

f) a change-over switch (11) between the phase difference former and the control element (9, 10a) by means of which the specified frequency of the transformation elements can be switched over between control with a stored frequency value in the case of a mains failure and regulation, by means of which, following the reestablishment of the a.c. voltage network, the regulation deviation

$$(\overline{\Psi'_{\alpha_1}}$$

$- \varphi^*$), formed by the phase difference former, can be levelled, and

g) means (14, 4') by means of which either the frequency-variable transformation elements or the re-transformed co-system components, which correspond to the transformation elements which are weighted with the amplitude of the co-system, are tapped as network-synchronous reference voltage system.

15. A device as claimed in claim 14, <u>characterised by</u> a subtraction stage (18) for the component-wise subtraction of the re-transformed co-system components from the stable a.c. voltage network components supplied by the network pick-up device, a second vector rotator (2'') which is acted upon by the transformation elements and which effects a transformation into an oppositely rotating reference system, a following, second smoothing element (3'') which forms the orthogonal, transformed counter-system components, a further vector rotator (4'') which re-transforms the transformed counter-system components into the spatially stable reference system, and an adder (19) which carries out a component-wise addition of the re-transformed counter-system components and of the re-transformed co-system components.

30

16. A device as claimed in claim 14 or 15, <u>characterised in</u> that the phase difference former includes a vector analyser (5) which determines the amplitude

$$(\overline{\underline{U}'})$$

and the phase

$$(\overline{\Psi'_{\alpha_1}}),$$

relative to the rotating reference system, of the co-system components, that the control element contains an integrating sine-cosine-generator, in particular with an oscillator (9a) which is frequency-controlled by the regulation deviation and which is connected at its output end to a counter (50) which controls a sine-cosine-generator, and that a multiplier (4b') which is connected to the amplitude output of the vector analyser (5) and to the function output (54) of the sine-cosine function generator forms the re-transformed co-system components in the spatially stable reference system (Fig. 17).

17. A device as claimed in claim 16, <u>characterised in</u> that the sine-cosine generator includes a quartz crystal oscillator (9a) which in the case of free oscillation is tuned to the stored frequency mean value and when the phase regulation is activated is voltage-controlled by the regulation deviation, and which serves to drive the counter (50).

18. A device as claimed in one of the claims 14 to 17, characterised in that an angle discriminator is provided which serves to form an additional, quantised value ($\Delta_{\varphi z}$) of the regulation deviation, preferably an analogue/digital converter (52), and that means (51) are provided which, at the end of the mains failure, adjust the phase of the transformation elements by the quantised value. (Fig. 17).


**Revendications**

1. Procédé pour déterminer le vecteur

$$(\overline{\underline{U}_{\alpha\beta}})$$

de la tension de référence, synchrone avec le réseau, pour un ensemble de commande d'un convertisseur de courant piloté par le réseau, notamment dans un réseau à tension alternative affecté d'oscillations harmoniques après un dérangement du réseau, dans le cas de la présence d'un réseau à courant alternatif:
- la phase de la tension de référence est déterminée par un vecteur de transformation ($\varphi_s$, cos $\varphi_s$, sin $\varphi_s$) tournant avec la fréquence commandable et qui est synchronisé avec le vecteur de la tension du réseau;
- le vecteur de la tension du réseau (figures 1 et 2: $\underline{U}_{\alpha\beta}$; figure 16: $\underline{U}_{\varphi\alpha}$) fixe dans l'espace est obtenu à partir des valeurs de mesure ($U_{RST}$) du réseau à tension alternative, et converti par une transformation de fréquence à l'aide du vecteur de transformation ($\varphi_s$), en deux composantes à fréquence transformée (figures 1 et 2: $\underline{U}_{\alpha'\beta'}$) (figures 1 et 2: dispositif de rotation vectoriel 2'; figure 16: noeud de soustraction 42);
- les composantes, à fréquence transformée, de la tension du réseau sont lissées (circuit de lissage 3'), et une coordonnée angulaire

$$(\overline{\varphi'_{\alpha} \cdot})$$

est déterminée à partir des composantes lissées (figure 1: analyseur vectoriel 5; figure 2: transformateur 5a de coordonnées cartésiennes en coordonnées polaires, figure 16: sortie angulaire du circuit de lissage 3');
- la fréquence du vecteur de transformation ($\varphi_s$; cos $\varphi_s$. sin $\varphi_s$) est réglée sur un écart de réglage (figure 2 =

$$\overline{\varphi'_{\alpha} \cdot}$$

-$\varphi^*$ = 0), qui s'évanouit, entre la coordonnée angulaire

$$(\overline{\varphi'_{\alpha} \cdot})$$

dérivée des composantes de la fréquence transformée, et une valeur de consigne prédéterminée ($\varphi^*$) de la phase (figures 1, 2 et 16: amplificateurs de réglage 7, 8; circuits de réglage 9 et 10 ou 10a); - en tant que vecteur de la tension de référence, synchronisé avec le réseau, on prélève soit le vecteur de transformation normalisé par rapport à une amplitude constante (figures 1 et 2: cos $\varphi_s$, sin $\varphi_s$, sortie 14), soit on prélève les composantes

$$(\overline{U'_{\alpha}}, \overline{U'_{\beta}})$$

de la tension du réseau lissée et transformée de façon inverse (figure 2: dispositif de rotation vectoriel 4') dans le système fixe dans l'espace au moyen d'une transformation de fréquence inverse de la première transformation de fréquence (figure 2);

ainsi que par les phases opératoires suivantes dans le cas d'un dérangement du réseau:

- la fréquence du vecteur de transformation est commandée, lorsque le dispositif de régulation de phase est débranché, avec une valeur de fréquence ($2\pi x f_0 = d\varphi_0/dt$) mémorisée pour la durée de la perturbation du réseau;

- après le rétablissement du réseau à tension alternative, le dispositif de régulation de phase (7 à 10a) est branché (interrupteur 11).

2. Procédé suivant la revendication 1, caractérisé par le fait que les coordonnées cartésiennes orthogonales (figures 1 et 2 : $U_\alpha$, $U_\beta$) du vecteur de la tension du réseau sont soumises à la transformation de fréquence et à un lissage ultérieur, pour la formation de composantes orthogonales, du système direct ($U'_{\alpha'}$, $U'_{\beta'}$) à transformation de fréquence.

3. Procédé suivant la revendication 1, caractérisé par le fait que les coordonnées polaires (figure 16: $U,\varphi\alpha$) du vecteur de la tension du réseau sont soumises à la transformation de fréquence et au lissage ultérieur.

4. Procédé suivant l'une des revendications 1 à 3, caractérisé par le fait que la fréquence du vecteur de transformation est soumise à une commande pilote avec une valeur de fréquence (figure 1 et figure 16 : $f_0$) prédéterminée pour la valeur moyenne de la fréquence du réseau, dans le cas de la présence d'un réseau à tension alternative.

5. Procédé suivant la revendication 2, caractérisé par le fait qu'également les composantes orthogonales, à fréquence transformée

$$(\overline{U''_{\alpha''}}, \overline{U''_{\beta''}})$$

du système inverse sont formées par une seconde transformation de fréquence (dispositif de rotation vectorielle 2''), inverse de la première transformation de fréquence, et par un second lissage (circuit de lissage 3''), et sont transformées de façon inverse au moyen d'une transformation (dispositif de rotation vectorielle 4'') inverse de la seconde transformation de fréquence, et que le résultat de la superposition (circuit additionneur 19) du système direct

$$(\overline{U'_{\alpha\beta}})$$

transformé en inverse et du système inverse

$$(\underline{\overline{U''_{\alpha\beta}}})$$

transformé en inverse est prélevée en tant que vecteur de la tension de référence, synchronisé avec le réseau.

6. Procédé suivant la revendication 5, caractérisé par le fait que le système fournissant la différence ($\underline{U}_{\alpha\beta} -$

$$\overline{\underline{U}'_{\alpha\beta}})$$

entre les composantes, fixes dans l'espace, de la tension alternative et le système direct transformé en inverse.

7. Procédé suivant l'une des revendications 1 à 6, caractérisé par le fait que pour le lissage, on utilise un circuit de libération et un filtre réglé sur la suppression des oscillations harmoniques critiques, auquel cas ce lissage est réglé sur un facteur d'amplitude inférieur à environ 2 % pour l'oscillation harmonique critiques la plus faible (figures 7, 8).

8. Procédé suivant l'une des revendications 1 à 7, caractérisé par le fait que l'écart de réglage est éliminé par réglage avec une amplification du circuit de réglage qui augmente d'une manière plus que proportionnelle pour des valeurs croissantes (figure 1 et figure 2: amplificateur de réglage 7).

9. Procédé suivant l'une des revendications 1 à 8, caractérisé par le fait qu'en plus de l'écart de réglage, une valeur quantifiée (figure 17, $\Delta\varphi_z$) de l'écart de réglage est formée et qu'une intervention a été effectuée de façon transitoire dans la commande ou la régulation de la fréquence de transformation de manière que la phase ($\varphi_s$) du vecteur de transformation soit décalée de la valeur quantifiée ($\Delta\varphi_z$).

10. Procédé suivant la revendication 9, caractérisé par le fait que ce n'est qu'après l'écoulement d'un intervalle de temps de retard prédéterminé (figure 9 et figure 10: $t_1$-$t_2$) après la fin ($t_1$) d'un dérangement du réseau, qu'une intervention est effectuée de façon transitoire avec la valeur quantifiée sur la commande de la fréquence de transformation et que la régulation de phase est branchée.

11. Procédé suivant la revendication 10, caractérisé par le fait que la régulation de phase n'est déclenchée qu'à la fin de l'intervention.

12. Procédé suivant la revendication 11, caractérisé par le fait que la fréquence d'impulsions de comptage destinée à un compteur est commandée par l'écart de réglage, que la valeur quantifiée de l'écart de réglage est formée par numérisation, que pour l'intervention transitoire sur la fréquence de transformation, l'écart de réglage linéarisé est ajouté à l'état de comptage et que l'état de comptage est utilisé en tant que valeur numérique pour la phase du vecteur de transformation (figure 17).

13. Procédé suivant la revendication 9, 10 ou 11, caractérisé par le fait que la valeur quantifiée n est formée par prédétermination d'un nombre N conformément à un écart de réglage

$$( \overline{\varphi'\alpha},$$

$$- \varphi^* - 360°/2N = n +$$

$$( \overline{\varphi'\alpha},$$

$- \varphi^*$) modulo 360°/N et en tant qu'intervention dans la commande, une valeur de fréquence supplémentaire $f_z$ est prédéterminée conformément à $\int_{\Delta t} f_z \times dt = n$ pendant la durée $\Delta t$ pour la commande de fréquence (figures 11 à 15).

14. Dispositif pour la mise en oeuvre du procédé suivant l'une des revendications 2 et 4 à 11, dans la mesure où ces dernières sont dépendantes de la revendication 2, contenant (figure 2):

a) un circuit (1) de détection du réseau servant à former deux composantes orthogonales, fixes dans l'espace, de la tension alternative,

b) un premier dispositif d'orientation vectorielle (2') servant à composer les composantes, fixes dans l'espace, dans un système de référence tournant,

c) un premier circuit de lissage (3') pour les composantes transformées, servant à la formation des composantes transformées du système direct,

d) un dispositif de formation de la différence de phase servant à former l'écart de réglage entre la phase

$$( \overline{\varphi'\alpha}, )$$

des composantes transformées du système direct et une valeur de consigne prédéterminée de la phase ($\varphi^*$),

e) un circuit de réglage (9, 10a), qui est branché en aval du dispositif de formation de la différence de phase et sert à former les composantes, fixes dans l'espace, d'un axe de référence du système de référence tournant, qui sont envoyées en tant qu'éléments de transformation à fréquence variable à l'entrée du signal angulaire du premier dispositif de rotation vectorielle,

f) un commutateur (11) situé entre le dispositif de formation de la différence de phase et le circuit de réglage (9, 10a) et à l'aide duquel la prédétermination de la fréquence des éléments de transformation peut être commutée entre une commande avec une valeur de fréquence mémorisée dans le cas d'un dérangement du réseau et une régulation, à l'aide de laquelle, après le rétablissement du réseau à tension alternative, l'écart de réglage

$$( \overline{\varphi'\alpha},$$

$- \varphi^*$) formé par le dispositif de formation de la différence de phase peut être éliminé par réglage, et

g) les moyens (14 ou 4'), à l'aide desquels soit les éléments de transformation à fréquence variable, soit les composantes du système direct, transformées de façon inverse et correspondant aux éléments de transformation pondérés par l'amplitude du système direct, sont prélevées en tant que système de tension de référence, synchronisé par le réseau.

15. Dispositif suivant la revendication 14, caractérisé par un étage de soustraction (18) servant à soustraire, composante par composante, les composantes du système direct transformées de façon inverse, des composantes, fixes dans l'espace et fournies par le dispositif de détection du réseau, de la tension alternative, un second dispositif de rotation vectorielle (2') chargé par les éléments de transformation et servant à réaliser la transformation en un système de référence tournant en sens opposé, un second circuit de lissage (3") branché en aval et servant à former les composantes orthogonales transformées du système inverse, un autre dispositif de rotation vectorielle (4") servant à transformer de façon inverse les composantes transformées du système inverse en le système de référence fixe dans l'espace, et un circuit additionneur (19) servant à réaliser l'addition, composante par composante, des composantes transformées en inverse du système inverse et des composantes transformées en inverse du système direct.

16. Dispositif suivant la revendication 14 ou 15, caractérisé par le fait que le dispositif de formation de la différence de phase contient un analyseur vetoriel (5) servant à déterminer l'amplitude

$$(\overline{U'})$$

et la phase

$$(\overline{\varphi'\swarrow,}),$$

rapportée au système de référence tournant, des composantes du système direct, que le circuit de réglage contient un générateur de sinus-cosinus réalisant une intégration, notamment un oscillateur (9a) commandé en fréquence par l'écart de réglage et en aval duquel est branché un compteur (5) commandant un générateur de sinus-cosinus, et qu'un circuit multiplicateur (4b') chargé par la sortie d'amplitude de l'analyseur vectoriel (5) et par les sorties de fonction (54) du générateur de fonctions sinus-cosinus, forme les composantes, transformées en inverse du système direct dans le système de référence fixe dans l'espace (figure 17).

17. Dispositif suivant la revendication 16, caractérisé par le fait que le générateur de sinus-cosinus contient un oscillateur à quartz (9a) servant à commander le compteur (5) et qui est accordé, dans le cas d'une oscillation libre, sur la valeur centrale mémorisée de la fréquence et dont la tension est commandée par l'écart de réglage lorsque la régulation de phase est branchée.

18. Dispositif suivant l'une des revendications 14 à 17, caractérisé par le fait qu'il est prévu un discriminateur angulaire pour la formation d'une valeur supplémentaire quantifiée $(\Delta_{\varphi z})$ de l'écart de réglage, de préférence un convertisseur analogique/numérique 52, et qu'il est prévu des moyens (51), à l'aide desquels, à la fin du dérangement du réseau, la phase des éléments de transformation est décalée de la valeur quantifiée (figure 17).

FIG 1

FIG 2

FIG 3

0 150 370

$U_\alpha/U' = \cos\varphi_\alpha$

$\cos\varphi_s$

$t_0$

$U_\beta/U' = \sin\varphi$

$\sin\varphi_s$

$t_0$

$f_v = f_0 + \Delta f$

Störung

$U_\alpha$

$\cos\varphi_s$

$t_1$

$\sin\varphi_s$

$U_\beta$

$t_1$

FIG 4

$\bar{U}_\alpha$

$U_\alpha$ (n=3)

$\bar{U}_\beta$

$U_\beta$ (n=3)

FIG 5

0 150 370

FIG 6

$$F_F = \frac{1}{1+sT_1} \cdot \frac{1+Z_1 \cdot T_2 s + T_2 \cdot T_3 s^2}{1+T_2 s + T_2 \cdot T_3 s^2}$$

120 Hz
$(T_2 = T_3 = 1,33\,ms)$

FIG 7

$$\frac{1+Z_1 \cdot T_2 \cdot s + T_2 \cdot T_3 \cdot s^2}{1+T_2 \cdot s + T_2 \cdot T_3 \cdot s^2}$$

$$\frac{1}{1+sT_1}$$

**FIG 8**

$$\cos\overline{\varphi}'_{\alpha'} = \overline{U}'_{\alpha'}/\overline{U}'$$

$$\sin\overline{\varphi}'_{\alpha'} = \overline{U}'_{\beta'}/\overline{U}'$$

$$\overline{U}' = \sqrt{\overline{U}'^2_{\alpha'} + \overline{U}'^2_{\beta'}}$$

**FIG 9**

FIG 10

FIG 12

$A_4$

$A_5$　$360°/N$

$(\bar{\varphi}'_\alpha - \varphi^*)$

$A_3$

$\varphi^*$

$\bar{\varphi}'_\alpha$

$A_0$

$A_2$　$A_1$

$-\dfrac{360°}{2N} = -30°$

**FIG 11**

$-\sin(\bar{\varphi}'_\alpha - \varphi^*)$　$\cos(\bar{\varphi}'_\alpha - \varphi^*)$

$-\sin(\bar{\varphi}'_\alpha - \varphi^*)$

V

$V \sin 30° = V/2$

0

$-V/2$

A

B

C

D

$\overline{A}(\overline{A_2}\,\overline{A_4}) = A_3$

$ABC = A_5$

$A\overline{B}\overline{D} = A_1$

$A_1$

$\overline{A}\,\overline{B}\,\overline{D} = A_2$　$\overline{A}BC = A_4$　$A\cdot(\overline{A_1}\,A_5) = A_0$　$A_2$

**FIG 13**

15

FIG 14

FIG 15

$\Delta \varphi_Z = n \cdot \Delta f_0 \cdot 2\pi$

$(\overline{\varphi}_\alpha' - \varphi*) = -150°$

$(\overline{\varphi}_\alpha' - \varphi*) = -90°$

$(\overline{\varphi}_\alpha' - \varphi*) = -30°$

$(\overline{\varphi}_\alpha' - \varphi*) = 30°$

$(\overline{\varphi}_\alpha' - \varphi*) = 90°$

$t_3 = t_2 + n \cdot T_0$

FIG 16

FIG 17

FIG 18